# EUROPEAN PATENT SPECIFICATION

(11) **EP 3 198 387 B1**
(45) Date of publication and mention of the grant of the patent: **18.11.2020**
(21) Application number: 15845448.8
(22) Date of filing: 28.09.2015
(51) Int. Cl.: G06F 3/041, G06F 3/0488

(54) **METHOD AND SYSTEM FOR SENSING WATER, DEBRIS OR OTHER EXTRANEOUS OBJECTS ON A DISPLAY SCREEN**
VERFAHREN UND SYSTEM ZUR MESSUNG VON WASSER, ABLAGERUNGEN ODER ANDEREN FREMDOBJEKTEN AUF EINEM ANZEIGEBILDSCHIRM
PROCÉDÉ ET SYSTÈME POUR DÉTECTER DE L'EAU, DES DÉBRIS OU D'AUTRES OBJETS ÉTRANGERS SUR UN ÉCRAN D'AFFICHAGE

(30) Priority: 26.09.2014 US 201414498661; 26.09.2014 US 201414498722
(43) Date of publication of application: 02.08.2017
(73) Proprietor: Rakuten, Inc., Tokyo 158-0094 (JP)
(72) Inventor: MCDOUGALL, Paul, Toronto, Ontario M6K 1A7 (CA); TALUSAN, George, Toronto, Ontario M6K 1A7 (CA); BEGHIAN, Robert, Toronto, Ontario M6K 1A7 (CA); WU, James, Toronto, Ontario M6K 1A7 (CA); HUNTER, Trevor, Toronto, Ontario M6K 1A7 (CA); MANTHA, Ramesh, Toronto, Ontario M6K 1A7 (CA)
(74) Representative: EIP
(86) International application number: PCT/JP2015/004913
(87) International publication number: WO 2016/047153

(56) References cited:
- EP-A2- 2 464 099
- WO-A1-2014/092038
- WO-A1-2014/129825
- JP-A- 2003 015 779
- JP-A- 2013 222 283
- US-A1- 2009 174 676
- US-A1- 2011 199 389
- US-A1- 2012 092 288
- US-A1- 2013 201 160
- US-A1- 2014 146 070
- US-A1- 2014 192 027
- US-A1- 2014 267 085

## Description

### Technical Field

The application relates to a computing device that detects the presence of water and/or other extraneous objects on the surface of a display of a computing device.

### Background Art

An electronic personal display is a mobile computing device that displays information to a user. While an electronic personal display may be capable of many of the functions of a personal computer, a user can typically interact directly with an electronic personal display without the use of a keyboard that is separate from or coupled to but distinct from the electronic personal display itself. Some examples of electronic personal displays include mobile digital devices/tablet computers such (e.g., Apple iPad®, Microsoft® Surface™, Samsung Galaxy Tab® and the like), handheld multimedia smartphones (e.g., Apple iPhone®, Samsung Galaxy S®, and the like), and handheld electronic readers (e.g., Amazon Kindle®, Barnes and Noble Nook®, Kobo Aura HD, and the like).

Some electronic personal display devices are purpose built devices that are designed to perform especially well at displaying readable content. For example, a purpose built purpose build device may include a display that reduces glare, performs well in high lighting conditions, and/or mimics the look of text on actual paper. While such purpose built devices may excel at displaying content for a user to read, they may also perform other functions, such as displaying images, emitting audio, recording audio, and web surfing, among others.

There also exists numerous kinds of consumer devices that can receive services and resources from a network service. Such devices can operate applications or provide other functionality that links a device to a particular account of a specific service. For example, e-reading devices typically link to an online bookstore, and media playback devices often include applications which enable the user to access an online media library. In this context, the user accounts can enable the user to receive the full benefit and functionality of the device.

EP 2 464 009 A2 (SONY CORP) relates to an electronic apparatus 100 including a display control unit configured to change a display mode of a display based on the detection of liquid on the surface of the display.

### Brief Description of Drawings

[fig.1]FIG. 1 illustrates a system for utilizing applications and providing e-book services on a computing device, according to a first embodiment.
[fig.2]FIG. 2 illustrates an example of an e-reading device or other electronic personal display device, for use with one or more embodiments described herein.
[fig.3A]FIG. 3A illustrates embodiments of an e-reading device 300 capable of detecting water, debris or other extraneous objects, in accordance with some embodiments.
[fig.3B]FIG. 3B illustrates embodiments of an e-reading device 300 capable of detecting water, debris or other extraneous objects, in accordance with some embodiments.
[fig.4]FIG. 4 illustrates an embodiment of an e-reading device capable of detecting water, in accordance with another embodiment.
[fig.5]FIG. 5 illustrates an e-reading system for displaying e-book content, according to one or more embodiments.
[fig.6]FIG. 6 illustrates a method of operating an e-reading device that is capable of detecting water, according to one or more embodiments.
[fig.7]FIG. 7 illustrates a system for utilizing applications and providing e-book services on a computing device, according to a second embodiment.
[fig.8]FIG. 8 illustrates an example of an e-reading device or other electronic personal display device, for use with one or more embodiments described herein.
[fig.9]FIG. 9 illustrates embodiments of an e-reading device operable in a splash mode when water and/or other extraneous objects are present on the display, in accordance with some embodiments.
[fig.10]FIG. 10 illustrates an embodiment of an e-reading device operable in a splash mode when water and/or other extraneous objects are present on the display, in accordance with another embodiment.
[fig.11]FIG. 11 illustrates an e-reading system for displaying e-book content, according to one or more embodiments.
[fig. 12]FIG. 12 illustrates a method of operating an e-reading device when water and/ or other extraneous objects are present on the display, according to one or more embodiments.

### Description of Embodiments

### DEFINITION

"E-books" are a form of electronic publication that can be viewed on computing device with suitable functionality. An e-book can correspond to a literary work having a pagination format, such as provided by literary works (e.g., novels) and periodicals (e.g., magazines, comic books, journals, etc.). Optionally, some e-books may have chapter designations, as well as content that corresponds to graphics or images (e.g., such as in the case of magazines or comic books). Multi-function devices, such as cellular-telephony or messaging devices, can utilize specialized applications (e.g., e-reading apps) to view e-books. Still further, some devices (sometimes labeled as "e-readers") can be centric towards content viewing, and e-book viewing in particular.

An "e-reading device" can refer to any computing device that can display or otherwise render an e-book. By way of example, an e-reading device can include a mobile computing device on which an e-reading application can be executed to render content that includes e-books (e.g., comic books, magazines, etc.). Such mobile computing devices can include, for example, a multi-functional computing device for cellular telephony/messaging (e.g., feature phone or smart phone), a tablet device, an ultramobile computing device, or a wearable computing device with a form factor of a wearable accessory device (e.g., smart watch or bracelet, glasswear integrated with a computing device, etc.). As another example, an e-reading device can include an e-reading device, such as a purpose-built device that is optimized for an e-reading experience (e.g., with E-ink displays).

One or more embodiments described herein provide that methods, techniques and actions performed by a computing device are performed programmatically, or as a computer-implemented method. Programmatically means through the use of code or computer-executable instructions. A programmatically performed step may or may not be automatic.

One or more embodiments described herein may be implemented using programmatic modules or components. A programmatic module or component may include a program, a subroutine, a portion of a program, or a software or a hardware component capable of performing one or more stated tasks or functions. As used herein, a module or component can exist on a hardware component independently of other modules or components. Alternatively, a module or component can be a shared element or process of other modules, programs or machines.

Furthermore, one or more embodiments described herein may be implemented through instructions that are executable by one or more processors. These instructions may be carried on a computer-readable medium. Machines shown or described with figures below provide examples of processing resources and computer-readable mediums on which instructions for implementing embodiments of the invention can be carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash or solid state memory (such as carried on many cell phones and consumer electronic devices) and magnetic memory. Computers, terminals, network enabled devices (e.g., mobile devices such as cell phones) are all examples of machines and devices that utilize processors, memory, and instructions stored on computer-readable mediums. Additionally, embodiments may be implemented in the form of computer programs, or a computer usable carrier medium capable of carrying such a program. The application will be carried out according to the attached independent claims.

### (First Embodiment)

Embodiments described herein provide for a computing device that can detect the presence of water and debris (or other persistent objects) on the surface of a display of the computing device. More specifically, the computing device may determine that the surface of the display is wet based on the detection of a plurality of interactions with touch sensors provided with the display. For example, the computing device may determine that the display surface is wet if multiple interactions (e.g., three or more touch-based contacts) are detected, concurrently, and at least one of the interactions is a persistent interaction (e.g., contact with at least one of the touch sensors is continuously maintained for a threshold duration).

The computing device may respond to water detection, for example, by adjusting one or more device settings (e.g., a display state, device configurations, and/or input responses). The adjustments made by the computing device include performing operations to maintain viewability of content appearing on the display screen. As an addition or variation, the computing device may respond by implementing operations to maintain a usability or functionality of the display screen.

According to some embodiments, a computing device includes a housing and a display assembly having a screen. The housing at least partially circumvents the screen so that the screen is viewable and a set of touch sensors are provided with the display assembly. A processor is provided within the housing to detect a plurality of interactions with the set of touch sensors. The processor further determines, based on the plurality of interactions, that the screen of the display assembly is wet. For some embodiments, the processor may then adjust one or more settings of the computing device in response to determining that the screen is wet. For example, the one or more settings may include a set of actions to be performed by the processor in response to subsequent interactions with the set of touch sensors.

For some embodiments, the processor may determine a number of interactions that are detected, concurrently, via the set of touch sensors. The processor may further determine that the screen is wet based, at least in part, on the number of interactions that are concurrently detected via the set of touch sensors. For example, the processor may determine that the screen is wet if three or more interactions are detected, concurrently, via the set of touch sensors. More specifically, the three or more interactions may be detected via respective touch sensors positioned at distinct regions of the display assembly.

Further, for some embodiments, the processor may determine a contact duration associated with each of the plurality of interactions. Specifically, each contact duration may represent a length of time for which a corresponding object is in continuous contact with a particular region of the screen when interacting with the set of touch sensors. The processor may further determine that the screen is wet based, at least in part, on the contact duration associated with each of the plurality of interactions. For example, the processor may determine that the screen is wet if the contact duration for at least one of the plurality of interactions exceeds a threshold duration.

Among other benefits, examples described herein enable a personal display device, such as an e-reading device, to detect that its display surface is wet and to adjust one or more device settings accordingly. The presence of water drops, smears and/or splashes on the surface of a display screen of an e-reading device may inhibit or otherwise impede one or more functions of the device. For example, the water may be falsely interpreted as a user "touch" input by one or more touch sensors provided with the display. This may cause the computing device to malfunction (e.g., perform undesired actions) and/or prevent the device from responding to actual (e.g., desired) user inputs. Therefore, the e-reading device may adjust one or more device settings, in response to detecting that the display surface is wet, in order to prevent the device from malfunctioning and/or to enable a user to continue operating the device even with the water present.

### SYSTEM DESCRIPTION

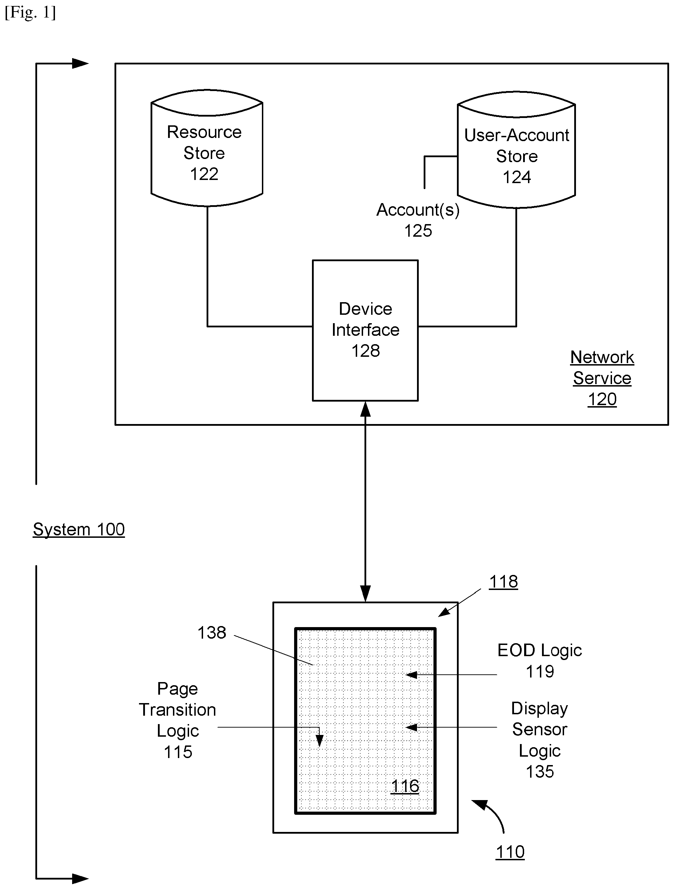

FIG. 1 illustrates a system 100 for utilizing applications and providing e-book services on a computing device, according to a first embodiment. In an example of FIG. 1, system 100 includes an electronic display device, shown by way of example as an e-reading device 110, and a network service 120. The network service 120 can include multiple servers and other computing resources that provide various services in connection with one or more applications that are installed on the e-reading device 110. By way of example, in one implementation, the network service 120 can provide e-book services which communicate with the e-reading device 110. The e-book services provided through network service 120 can, for example, include services in which e-books are sold, shared, downloaded and/or stored. More generally, the network service 120 can provide various other content services, including content rendering services (e.g., streaming media) or other network-application environments or services.

The e-reading device 110 can correspond to any electronic personal display device on which applications and application resources (e.g., e-books, media files, documents) can be rendered and consumed. For example, the e-reading device 110 can correspond to a tablet or a telephony/messaging device (e.g., smart phone). In one implementation, for example, e-reading device 110 can run an e-reader application that links the device to the network service 120 and enables e-books provided through the service to be viewed and consumed. In another implementation, the e-reading device 110 can run a media playback or streaming application that receives files or streaming data from the network service 120. By way of example, the e-reading device 110 can be equipped with hardware and software to optimize certain application activities, such as reading electronic content (e.g., e-books). For example, the e-reading device 110 can have a tablet-like form factor, although variations are possible. In some cases, the e-reading device 110 can also have an E-ink display.

In additional detail, the network service 120 can include a device interface 128, a resource store 122 and a user account store 124. The user account store 124 can associate the e-reading device 110 with a user and with an account 125. The account 125 can also be associated with one or more application resources (e.g., e-books), which can be stored in the resource store 122. The device interface 128 can handle requests from the e-reading device 110, and further interface the requests of the device with services and functionality of the network service 120. The device interface 128 can utilize information provided with a user account 125 in order to enable services, such as purchasing downloads or determining what e-books and content items are associated with the user device. Additionally, the device interface 128 can provide the e-reading device 110 with access to the content store 122, which can include, for example, an online store. The device interface 128 can handle input to identify content items (e.g., e-books), and further to link content items to the account 125 of the user.

As described further, the user account store 124 can retain metadata for individual accounts 125 to identify resources that have been purchased or made available for consumption for a given account. The e-reading device 110 may be associated with the user account 125, and multiple devices may be associated with the same account. As described in greater detail below, the e-reading device 110 can store resources (e.g., e-books) that are purchased or otherwise made available to the user of the e-reading device 110, as well as to archive e-books and other digital content items that have been purchased for the user account 125, but are not stored on the particular computing device.

With reference to an example of FIG. 1, e-reading device 110 can include a display screen 116 and a housing 118. In an embodiment, the display screen 116 is touch-sensitive, to process touch inputs including gestures (e.g., swipes). For example, the display screen 116 may be integrated with one or more touch sensors 138 to provide a touch sensing region on a surface of the display screen 116. For some embodiments, the one or more touch sensors 138 may include capacitive sensors that can sense or detect a human body's capacitance as input. In the example of FIG. 1, the touch sensing region coincides with a substantial surface area, if not all, of the display screen 116. Additionally, the housing 118 can also be integrated with touch sensors to provide one or more touch sensing regions, for example, on the bezel and/or back surface of the housing 118.

According to some embodiments, the e-reading device 110 includes display sensor logic 135 to detect and interpret user input made through interaction with the touch sensors 138. By way of example, the display sensor logic 135 can detect a user making contact with the touch sensing region of the display screen 116. More specifically, the display sensor logic 135 can detect taps, multiple taps, and/or gestures made through user interaction with the touch sensing region of the display screen 116. Furthermore, the display sensor logic 135 can interpret such interactions in a variety of ways. For example, each interaction may be interpreted as a particular type of user input corresponding with a change in state of the display 116.

For some embodiments, the display sensor logic 135 may interpret simultaneous contact with multiple touch sensors 138 as a type of non-user input. For example, the multi-sensor contact may be provided, in part, by water and/or other unwanted or persistent objects (e.g., dirt, debris, etc.) interacting with the touch sensors 138. Specifically, the e-reading device 110 may include extraneous object detection logic 119 to determine, based on the multi-sensor contact, that the display screen 116 is wet (and/or dirty). The display sensor logic 135 may then adjust one or more settings of the e-reading device 110 to account for the presence of water and/or other extraneous objects being in contact with the display screen 116. For example, upon determining that the display screen 116 is wet, the display sensor logic 135 may power off the e-reading device 110 to prevent malfunctioning and/or damage to the device 110. Alternatively, and/or in addition, the display sensor logic 135 may reconfigure the e-reading device 110 to respond (e.g., and/or not respond) to particular types of interactions that are subsequently detected via the touch sensors 138. This enables a user to continue operating the e-reading device 110 even with the water (and/or other undesired objects) present on the display screen 116.

In some embodiments, the e-reading device 110 includes features for providing functionality related to displaying paginated content. The e-reading device 110 can include page transitioning logic 115, which enables the user to transition through paginated content. The e-reading device 110 can display pages from e-books, and enable the user to transition from one page state to another. In particular, an e-book can provide content that is rendered sequentially in pages, and the e-book can display page states in the form of single pages, multiple pages or portions thereof. Accordingly, a given page state can coincide with, for example, a single page, or two or more pages displayed at once. The page transitioning logic 115 can operate to enable the user to transition from a given page state to another page state. In some implementations, the page transitioning logic 115 enables single page transitions, chapter transitions, or cluster transitions (multiple pages at one time).

The page transitioning logic 115 can be responsive to various kinds of interfaces and actions in order to enable page transitioning. In one implementation, the user can signal a page transition event to transition page states by, for example, interacting with the touch sensing region of the display screen 116. For example, the user may swipe the surface of the display screen 116 in a particular direction (e.g., up, down, left, or right) to indicate a sequential direction of a page transition. In variations, the user can specify different kinds of page transitioning input (e.g., single page turns, multiple page turns, chapter turns, etc.) through different kinds of input. Additionally, the page turn input of the user can be provided with a magnitude to indicate a magnitude (e.g., number of pages) in the transition of the page state. For example, a user can touch and hold the surface of the display screen 116 in order to cause a cluster or chapter page state transition, while a tap in the same region can effect a single page state transition (e.g., from one page to the next in sequence). In another example, a user can specify page turns of different kinds or magnitudes through single taps, sequenced taps or patterned taps on the touch sensing region of the display screen 116.

### HARDWARE DESCRIPTION

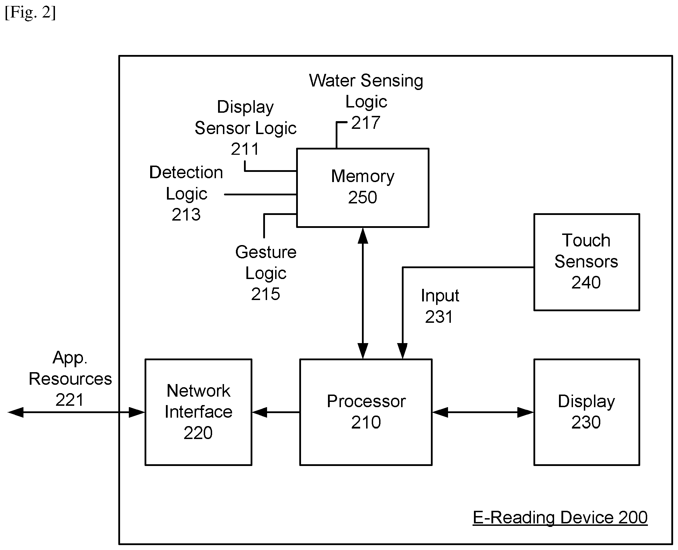

FIG. 2 illustrates an example of an e-reading device 200 or other electronic personal display device, for use with one or more embodiments described herein. In an example of FIG. 2, an e-reading device 200 can correspond to, for example, the device 110 as described above with respect to FIG. 1. With reference to FIG. 2, e-reading device 200 includes a processor 210, a network interface 220, a display 230, one or more touch sensor components 240, and a memory 250.

The processor 210 can implement functionality using instructions stored in the memory 250. Additionally, in some implementations, the processor 210 utilizes the network interface 220 to communicate with the network service 120 (see FIG. 1). More specifically, the e-reading device 200 can access the network service 120 to receive various kinds of resources (e.g., digital content items such as e-books, configuration files, account information), as well as to provide information (e.g., user account information, service requests etc.). For example, e-reading device 200 can receive application resources 221, such as e-books or media files, that the user elects to purchase or otherwise download from the network service 120. The application resources 221 that are downloaded onto the e-reading device 200 can be stored in the memory 250.

In some implementations, the display 230 can correspond to, for example, a liquid crystal display (LCD) or light emitting diode (LED) display that illuminates in order to provide content generated from processor 210. In some implementations, the display 230 can be touch-sensitive. For example, in some embodiments, one or more of the touch sensor components 240 may be integrated with the display 230. In other embodiments, the touch sensor components 240 may be provided (e.g., as a layer) above or below the display 230 such that individual touch sensor components 240 track different regions of the display 230. Further, in some variations, the display 230 can correspond to an electronic paper type display, which mimics conventional paper in the manner in which content is displayed. Examples of such display technologies include electrophoretic displays, electrowetting displays, and electrofluidic displays.

The processor 210 can receive input from various sources, including the touch sensor components 240, the display 230, and/or other input mechanisms (e.g., buttons, keyboard, mouse, microphone, etc.). With reference to examples described herein, the processor 210 can respond to input 231 from the touch sensor components 240. In some embodiments, the processor 210 responds to inputs 231 from the touch sensor components 240 in order to facilitate or enhance e-book activities such as generating e-book content on the display 230, performing page transitions of the e-book content, powering off the device 200 and/or display 230, activating a screen saver, launching or closing an application, and/or otherwise altering a state of the display 230.

In some embodiments, the memory 250 may store display sensor logic 211 that monitors for user interactions detected through the touch sensor components 240, and further processes the user interactions as a particular input or type of input. In an alternative embodiment, the display sensor logic 211 may be integrated with the touch sensor components 240. For example, the touch sensor components 240 can be provided as a modular component that includes integrated circuits or other hardware logic, and such resources can provide some or all of the display sensor logic 211 (see also display sensor logic 135 of FIG. 1). For example, integrated circuits of the touch sensor components 240 can monitor for touch input and/or process the touch input as being of a particular kind. In variations, some or all of the display sensor logic 211 may be implemented with the processor 210 (which utilizes instructions stored in the memory 250), or with an alternative processing resource.

In one implementation, the display sensor logic 211 includes detection logic 213 and gesture logic 215. The detection logic 213 implements operations to monitor for the user contacting a surface of the display 230 coinciding with a placement of one or more touch sensor components 240. The gesture logic 215 detects and correlates a particular gesture (e.g., pinching, swiping, tapping, etc.) as a particular type of input or user action. The gesture logic 215 may also detect directionality so as to distinguish between, for example, leftward or rightward swipes.

For some embodiments, the display sensor logic 211 further includes water sensing logic 217 for detecting the presence of water (and/or other extraneous objects) on the surface of the display 230. More specifically, the water sensing logic 217 may determine that water is present on the surface of the display 230 based on detected interactions with the touch sensors 240. The water sensing logic 217 may determine that water is present on the display 230 based on a number of touch-based interactions detected via the touch sensors 240 and/or a contact duration (e.g., a length of time for which contact is maintained with a corresponding touch sensor 240) associated with each interaction. In variations, the water sensing logic 217 can detect other forms of extraneous objects such as dirt and debris.

It should be noted that e-reading device 200 is typically able to process only a finite set of known interactions or gestures (e.g., pinching, swiping, tapping, etc.) as user inputs. Thus, the water sensing logic 217 may be triggered if the touch sensors 240 detect an interaction that falls outside of the set of known gestures (e.g., the gesture logic 215 is unable to correlate the interaction with a particular user input). For example, if the set of known gestures includes only single-contact gestures (e.g., single finger taps, single finger swipes, etc.), any multi-contact interaction (e.g., wherein two or more touch sensors 240 are concurrently activated) may trigger execution of the water sensing logic 217. More specifically, when a multi-contact interaction is detected, at least one of the interactions may be attributable to water (and/or other extraneous objects) contacting the surface of the display 230 (and thus interacting with one of the touch sensors 240). Thus, for some embodiments, the water sensing logic 217 may determine whether the display 230 is wet based on the number of simultaneous interactions detected via the touch sensors 240. For example, the greater the number of simultaneous interactions detected (e.g., three or more), the greater the likelihood that the water sensing logic 217 will determine that the surface of the display 230 is wet.

It is also noted that water tends to persist in the same region on the surface of the display 230 (e.g., until it evaporates or is wiped off). The presence of water may therefore cause one or more of the touch sensors 240 to remain active (e.g., detect "touch" or contact) for longer durations than the touch sensors 240 would typically experience in response to user-initiated interactions (e.g., tapping, swiping, or even tapping and holding). Thus, for some embodiments, the water sensing logic 217 may determine whether the display 230 is wet based on the contact duration associated with each interaction. For example, the longer the contact duration (e.g., greater than a threshold duration), that the water sensing logic 217 will determine that the surface of the display 230 is wet.

For some embodiments, the water sensing logic 217 may determine that the display 230 is wet based on a combination of factors including, for example, the number of simultaneous interactions detected via the touch sensors 240 and the contact duration associated with each interaction. In some instances, a user operating the e-reading device 200 may inadvertently touch the surface of the display 230 with multiple fingers (e.g., thus triggering a multi-contact detection via the touch sensors 240). In other instances, the e-reading device 200 may be configured to interpret tap-and-hold interactions as a particular type of user input (e.g., wherein the contact duration corresponds with a magnitude of the input). Therefore, in order to prevent false-positive determinations, the water sensing logic 217 may determine that the display 230 is wet only if the contact duration associated with at least one of multiple concurrent interactions is greater than a threshold duration.

Still further, for some embodiments, the water sensing logic 217 may adjust one or more settings of the e-reading device 200 in response to determining that the display 230 is wet. More specifically, the water sensing logic 217 may perform one or more operations to mitigate or overcome the presence of water, debris and/or other extraneous objects on the surface of the display 230. Thus, the water sensing logic 217 can alternatively sense debris and/or other extraneous objects. For example, the water sensing logic 217 may power off the display 230 and/or other hardware components of the device 200 to prevent malfunctions and/or damage (e.g., short-circuiting) to the e-reading device 200. Alternatively, and/or in addition, the water sensing logic 217 may alter one or more device configurations (e.g., such as disabling or deactivating one or more touch sensors 240 that coincide with a region of the display 230 on which the water is present) to enable the e-reading device 200 to be continuously operable even while the display 230 is wet (e.g., droplets exist on the surface). Still further, in some embodiments, the water sensing logic 217 may reconfigure one or more input responses of the gesture logic 215 (e.g., by disabling recognition of certain gestures and/or enabling a new set of gestures to be recognized by the gesture logic 215) to adapt to the presence of water on the surface of the display 230. Such embodiments are discussed in greater detail in the second embodiment of this application.

### INPUT-BASED WATER DETECTION

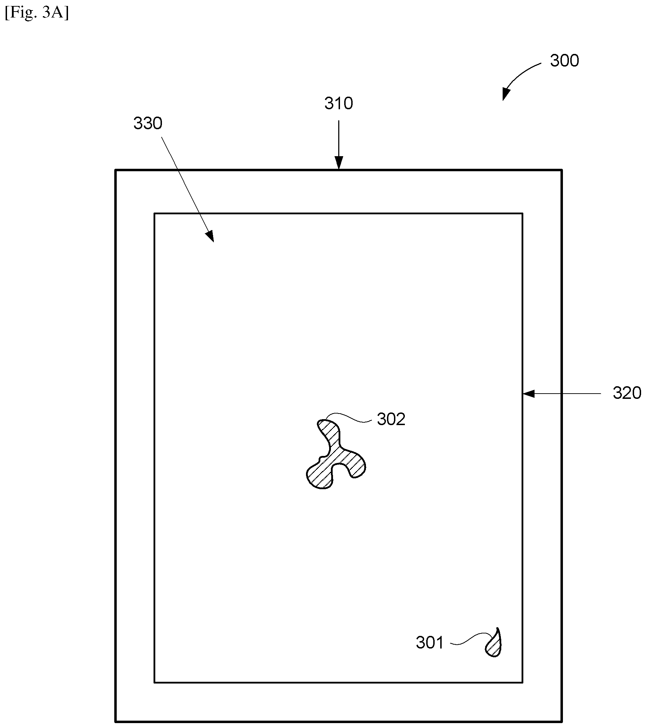

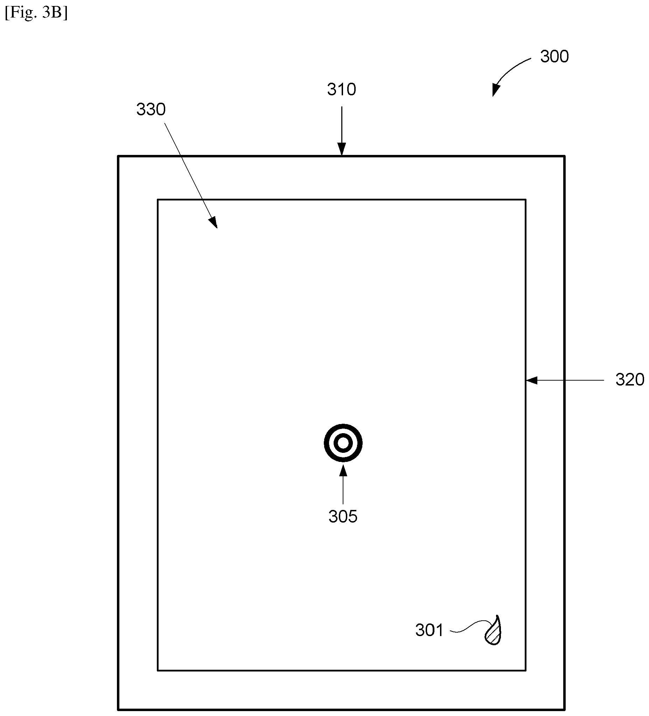

FIG. 3A and FIG. 3B illustrate embodiments of an e-reading device 300 capable of detecting water, debris or other extraneous objects, in accordance with some embodiments. The e-reading device 300 includes a housing 310 and a display screen 320. The e-reading device 300 can be substantially tabular or rectangular, so as to have a front surface that is substantially occupied by the display screen 320 so as to enhance content viewing. More specifically, the front surface of the housing 310 may be in the shape of a bezel surrounding the display screen 320. The display screen 320 can be part of a display assembly, and can be touch sensitive. For example, the display screen 320 can be provided as a component of a modular display assembly that is touch-sensitive and integrated with housing 310 during a manufacturing and assembly process.

A touch sensing region 330 is provided with at least a portion of the display screen 320. Specifically, the touch sensing region 330 may coincide with the integration of touch-sensors with the display screen 320. For some embodiments, the touch sensing region 330 may substantially encompass a surface of the display screen 320. Further, the e-reading device 300 can integrate one or more types of touch-sensitive technologies in order to provide touch-sensitivity on the touch sensing region 330 of the display screen 320. It should be appreciated that a variety of well-known touch sensing technologies may be utilized to provide touch-sensitivity at either the touch sensing region 330. By way of example, touch sensors used with the touch sensing region 330 can utilize resistive touch sensors; capacitive touch sensors (using self and/or mutual capacitance); inductive touch sensors; and/or infrared touch sensors.

For example, touch sensing region 330 can be employed using infrared sensors, which can detect an object contacting the surface of the display screen 320 when the presence of the object "cuts off' or otherwise interferes with an infrared beam being transmitted across the touch sensing region 330. In a variation, the touch sensing region 330 can be implemented using a grid pattern of electrical elements which can detect capacitance inherent in human skin. For example, the touch sensing region 330 can be implemented using a grid pattern of electrical elements which are placed over or just beneath the surface of the display screen 320, and which deform sufficiently on contact to detect touch from an object such as a finger. More generally, touch-sensing technologies for implementing the touch sensing region 330 can employ resistive touch sensors, capacitive touch sensors (using self and/or mutual capacitance), inductive touch sensors, and/or infrared sensors.

For some embodiments, e-reading device 300 may be configured to detect the presence of water (e.g., drops, splashes, and/or smears) on the touch sensing region 330 of the display screen 320. For example, the e-reading device 300 may implement an embodiment of the water sensing logic 217 described above in reference to FIG. 2. Specifically, the e-reading device 300 may determine that the display screen 320 is wet if two or more separate and distinct interactions are concurrently detected via the touch sensing region 330. For example, the set of known gestures for the e-reading device 300 may include only single-contact gestures.

With reference to FIG. 3A, a droplet of water 301 and a splash of water 302 are present on the display screen 320. It should be noted that, while the splash 302 covers a greater surface area (e.g., and may thus interact with more touch sensors) than the droplet 301, the splash 302 and the droplet 301 may each be associated with a single interaction since each represents one contiguous object. The e-reading device 300 may activate a water sensing timer upon detecting the presence of both the droplet 301 and the splash 302 concurrently on the touch sensing region 330. For example, the water sensing timer may then count down (e.g., for a predetermined duration) for as long as at least one of the droplet 301 and/or the splash 302 remains in contact with the touch sensing region 330. Once the water sensing timer times out (e.g., the countdown reaches zero), the e-reading device 300 may determine that the display screen 320 is wet. For some embodiments, the e-reading device 300 may further adjust one or more device settings upon determining that the display screen 320 is wet.

With reference to FIG. 3B, only the droplet of water 301 is present on the display screen 320. The droplet of water 301, by itself, may not trigger the water sensing timer of the e-reading device 300 because the device 300 may interpret contact by the droplet 301 as a tapping and/or tap-and-hold user interaction (e.g., which may be associated with a particular user input). However, the water sensing timer may be activated once a user interacts with the e-reading device 300. For example, the e-reading device 300 may initiate the water sensing timer upon detecting a user interaction 305 (e.g., corresponding to finger tap, swipe, or other gesture) with the touch sensing region 330 while the droplet 301 is concurrently present. Then, even if the user interaction 305 is no longer detected (e.g., the user's finger is subsequently lifted off), the water sensing timer may continue to count down (e.g., for the predetermined duration) as long as the droplet 301 remains in contact with the touch sensing region 330. Once the water sensing timer times out, the e-reading device 300 may determine that the display screen 320 is wet. For some embodiments, the e-reading device 300 may further adjust one or more device settings upon determining that the display screen 320 is wet.

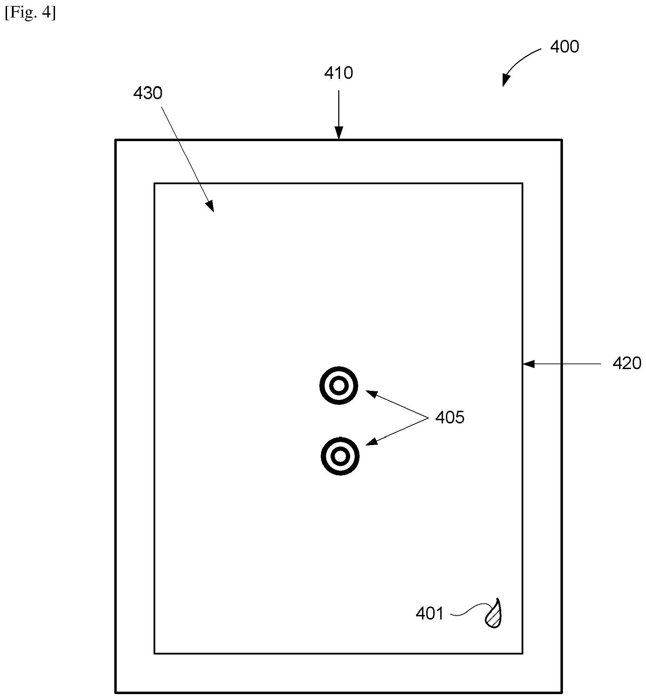

FIG. 4 illustrates an embodiment of an e-reading device 400 capable of detecting water, debris or other extraneous objects, in accordance with another embodiment. The e-reading device 400 includes a housing 410 and a display screen 420. The display screen 420 can be part of a display assembly, and can be touch sensitive. A touch sensing region 430 is provided with at least a portion of the display screen 420. Specifically, the touch sensing region 430 may coincide with the integration of touch-sensors with the display screen 420. For simplicity, it may be assumed that the housing 410, display screen 420, and touch sensing region 430 are functionally similar (if not identical) to the housing 310, display screen 320, and touch sensing region 330, respectively, of FIGS. 3A-3B.

For some embodiments, the e-reading device 400 may be configured to detect the presence of water on the touch sensing region 430 of the display screen 420. For example, the e-reading device 400 may implement an embodiment of the water sensing logic 217 described above in reference to FIG. 2. Specifically, the e-reading device 400 may determine that the display screen 420 is wet if three or more separate and distinct interactions are concurrently detected via the touch sensing region 430. For example, in contrast with e-reading device 300, the set of known gestures for the e-reading device 400 may include not only single-contact gestures but also multi-contact gestures (e.g., pinching, multi-finger tapping, multi-finger swiping etc.) that involve the use of two fingers concurrently in contact with the surface of the display screen 420.

In the example shown, only a single droplet of water 401 is present on the display screen 420. As described above, the e-reading device 400 may not detect the droplet of water 401 by itself (e.g., because the droplet 401 contacting the touch sensing region 430 may be interpreted as a tapping and/or tap-and-hold user interaction). Moreover, the e-reading device 400 also may not detect the droplet of water 401 in the presence of a single-contact user interaction (e.g., such as the user interaction 305 shown in FIG. 3B) since the two points of contact may be interpreted by the device 400 as a particular type of user input. However, the e-reading device 400 may activate a water sensing timer upon detecting a subsequent multi-contact user interaction (e.g., corresponding to a pinching, multi-finger tapping, or multi-finger swiping input) while the droplet 401 remains in contact with the touch sensing region 430. Moreover, the water sensing timer may continue to count down (e.g., for a predetermined duration), even if the user interaction 307 is no longer detected, as long as the droplet 401 remains in contact with the touch sensing region 430. Once the water sensing timer times out, the e-reading device 400 may determine that the display screen 420 is wet. For some embodiments, the e-reading device 400 may further adjust one or more device settings upon determining that the display screen 420 is wet.

While the examples of FIGS. 3A-3B and FIG. 4 illustrate specific examples in which multiple concurrent interactions with the touch sensing region of a display screen may be used to detect the presence of water, embodiments herein are not limited to these examples. More generally, an e-reading device may be configured to detect the presence of water in response to detecting any interactions that fall outside the set of known interactions and/or gestures for the device.

### WATER DETECTION FUNCTIONALITY

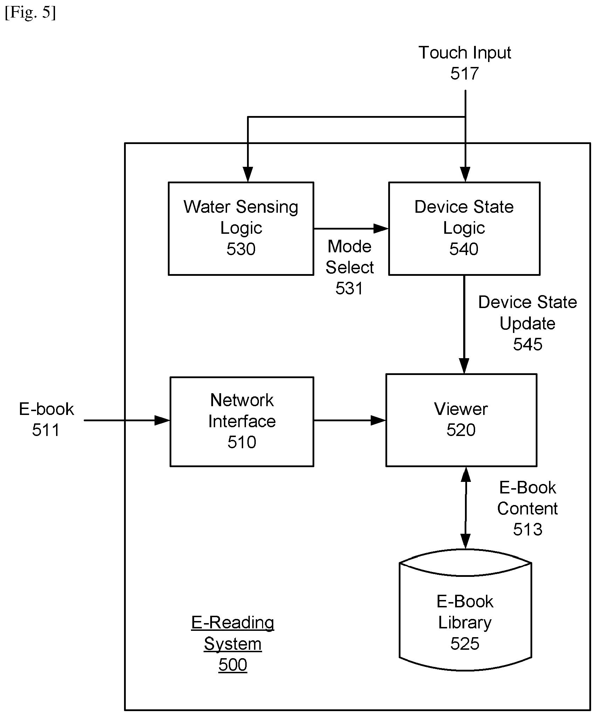

FIG. 5 illustrates an e-reading system 500 for displaying e-book content, according to one or more embodiments. An e-reading system 500 can be implemented as, for example, an application or device, using components that execute on, for example, an e-reading device such as shown with examples of FIGS. 1, 2, 3A-3B, and 4. Furthermore, an e-reading system 500 such as described can be implemented in a context such as shown by FIG. 1, and configured as described by an example of FIG. 2, FIGS. 3A-3B, and/or FIG. 4.

In an example of FIG. 5, a system 500 includes a network interface 510, a viewer 520, water sensing logic 530, and device state logic 540. As described with an example of FIG. 1, the network interface 510 can correspond to a programmatic component that communicates with a network service in order to receive data and programmatic resources. For example, the network interface 510 can receive an e-book 511 from the network service that the user purchases and/or downloads. E-books 511 can be stored as part of an e-book library 525 with memory resources of an e-reading device (e.g., see memory 250 of e-reading device 200).

The viewer 520 can access e-book content 513 from a selected e-book, provided with the e-book library 525. The e-book content 513 can correspond to one or more pages that comprise the selected e-book. The viewer 520 renders one or more pages on a display screen at a given instance, corresponding to the retrieved e-book content 513. The page state can correspond to a particular page, or set of pages that are displayed at a given moment.

The device state logic 540 can be provided as a feature or functionality of the viewer 520. Alternatively, the device state logic 540 can be provided as a plug-in or as independent functionality from the viewer 520. The device state logic 540 can signal device state updates 545 to the viewer 520. The device state update 545 can cause the viewer 520 to change or alter its current display state. For example, the device state logic 540 may be responsive to touch inputs 517 by signaling device state updates 545 corresponding to page transitions (e.g., single page transition, multi-page transition, or chapter transition).

Further, in specifying the device state update 545, the device state logic 540 can also provide instructions for a device shutoff, display shutoff, and/or screen saver. The device state update 545 for a device shutoff causes the entire system 500, including the viewer 520, to shut down and/or power off. The device state update 545 for a display shutoff causes only the viewer 520 to power off, thus placing the system 500 in a "sleep" mode. Further, the device state update 545 for a screen saver causes a screen saver to be displayed on the viewer 520. It should be noted that other device state updates 545 may also be provided such as, for example, launching and/or closing a book, application, menu, or sub-menu.

The water sensing logic 530 can be provided as a feature or functionality of the device state logic 540. Alternatively, the water sensing logic 530 can be provided as a plug-in or as independent functionality from the viewer 540. The water sensing logic 530 can detect the presence of water (and/or other extraneous objects) on the surface of the viewer 520. More specifically, the water sensing logic 530 may be response to touch inputs 517 by selectively outputting a mode select signal 531 to the device state logic 540. For example, the water sensing logic 530 may determine that the viewer 520 is wet based on a number of touch-based interactions detected via touch sensors provided with the viewer 520 (e.g., and received as touch inputs 517) and/or a contact duration associated with each interaction (e.g., a "magnitude" of each of the touch inputs 517).

For some embodiments, the water sensing logic 530 may determine that the viewer 520 is wet upon receiving a touch input 517 that is not a known input for the e-reading system 500 (e.g., the touch input 517 cannot be properly interpreted by the device state logic 540). For other embodiments, the water sensing logic 530 may determine that the viewer 520 is wet if the touch input 517 is maintained for a duration longer than a threshold duration. Still further, for some embodiments, the water sensing logic 530 may determine that the viewer is wet only if the touch input 517 is not a known input and persists beyond the threshold duration.

The mode select signal 531 instructs the device state logic 540 to operate in a "dry" mode or a "wet" mode. For example, the device state logic 540 may operate in the dry mode for as long as the mode select signal 531 is deasserted. However, upon determining that the viewer 520 is wet, the water sensing logic 530 may assert the mode select signal 531 to operate the device state logic 540 in the wet mode. For some embodiments, assertion of the mode select signal 531 may cause the device state logic 540 to adjust one or more settings of the e-reading system 500. For example, when operating in the wet mode, the e-reading system 500 may power off the viewer 520 and/or other hardware components, alter one or more device configurations, and/or reconfigure one or more input responses of the device state logic 540. More specifically, some or all of these adjustments may be carried out by the device state logic 540, for example, by generating corresponding device state updates 545.

### METHODOLOGY

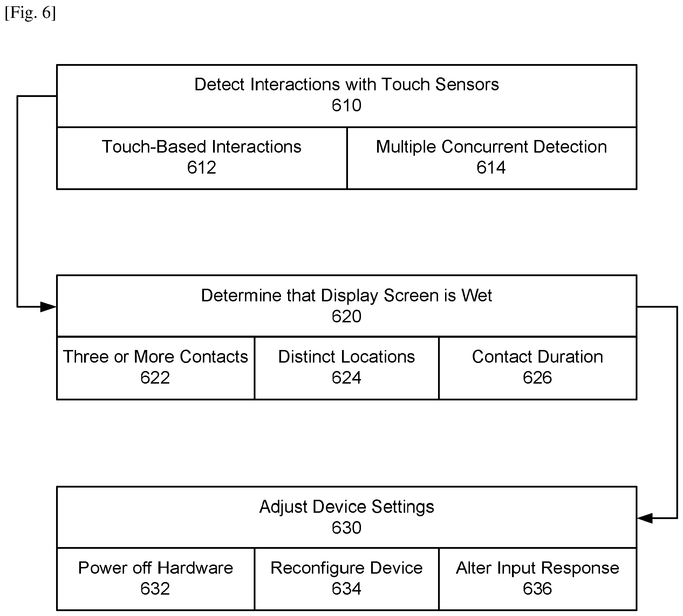

FIG. 6 illustrates a method of operating an e-reading device that is capable of detecting water, according to one or more embodiments. In describing an example of FIG. 6, reference may be made to components such as described with FIGS. 2-4 for purposes of illustrating suitable components for performing a step or sub-step being described.

With reference to an example of FIG. 2, the e-reading device 200 may detect interactions with touch sensors provided (or otherwise associated) with a display of the e-reading device 200 (610). For example, the interactions may be detected by the touch sensor components 240. More specifically, the placement of the sensor components 240 may coincide with one or more touch sensing regions on the surface of the display 230. For some embodiments, the touch sensors 240 may detect touch-based interactions on the surface of the display 230 (612).

For example, as shown in FIGS. 3A and 3B, the touch-based interactions may correspond with water, a finger, and/or other objects making contact with the surface of the display screen 320. Further, for some embodiments, the touch sensors 240 may detect multiple interactions, concurrently, on the surface of the display 230 (614). For example, as shown in FIGS. 3A and 3B, contact from the water droplet 301 may be detected independent of the water splash 302 and/or the user interaction 305.

The e-reading device 200 may subsequently determine that the screen is wet based on the detected interactions (620). For example, the processor 210, in executing the water sensing logic 217, may determine that the display 230 is wet in response to receiving an input 231 that is not a known input for the e-reading device 200. For some embodiments, the processor 210 may determine that the display 230 is wet if the received input 231 corresponds with three or more contacts detected by the touch sensors 240 (622) at separate and distinct locations on a surface of the display 230 (624), and at least one of the contacts is maintained for a threshold duration (626).

For example, as shown in FIG. 4, the touch sensing region 430 of the display screen 420 may simultaneously detect contact from the water droplet 401 and a multi-contact user interaction 405. Because three-finger interactions do not correlate with any known user input, the e-reading device 400 may activate a water sensing timer upon detecting the multi-contact interaction. More specifically, the e-reading device 400 may determine that the display screen 320 is wet after the water sensing timer expires (e.g., after sensing the water droplet 401 in contact with a corresponding region of the display screen 320 for at least the threshold duration).

The e-reading device 200 may further adjust one or more device settings after determining that the display screen is wet (630). For example, the processor 210, in executing the water sensing logic 217, may configure the device in a wet mode. More specifically, the wet mode may include a set of parameters to prevent damage to the e-reading device 200 and/or enable the e-reading device 200 to be operable even in the presence of water. For some embodiments, the processor 210 may power off one or more hardware components of the e-reading device 200 (632), reconfigure one or more device settings or performance parameters (634), and/or alter one or more input responses of the e-reading device (636).

For example, the e-reading device 200 may power off one or more hardware components to prevent water from short-circuiting or otherwise damaging the device 200. Alternatively, the e-reading device 200 may reconfigure one or more device components (e.g., such as disabling the touch sensor coinciding with the region of the display 230 which is in contact with the water) to prevent the water from interfering with a "normal" operation of the device 200. Similarly, the e-reading device 200 may alter one or more input responses to (e.g., such as modifying the set of known user inputs) to enable the device 200 to operate in a manner that is optimized for wet conditions.

### (Second Embodiment)

In the following disclosure, the explanations regarding the elements designated with the same numerals as the first embodiment will be omitted.

Embodiments described herein provide for a computing device that is operable even when water and/or other persistent objects are present on the surface of a display of the computing device. More specifically, the computing device may detect a presence of extraneous objects (e.g., such as water, dirt, or debris) on a surface of the display screen, and perform one or more operations to mitigate or overcome the presence of such extraneous objects in order to maintain a functionality and/or viewability of content appearing on the display screen. For example, upon detecting the presence of one or more extraneous objects, the computing device may operate in a secondary mode (e.g., a "splash mode") wherein one or more device settings and/or configurations (e.g., recognized gestures, supported inputs, and/or input responses) are modified.

A computing device includes a housing and a display assembly having a screen. The housing at least partially circumvents the screen so that the screen is viewable and a set of touch sensors are provided with the display assembly. A processor is provided within the housing to detect a gesture via the set of touch sensors, and to interpret the gesture as one of a plurality of user inputs. The processor further detects a presence of extraneous objects on a surface the screen of the display assembly, and adjusts one or more settings of the computing device in response to detecting the presence of extraneous objects.

For some embodiments, upon detecting the presence of extraneous objects the processor may reconfigure a set of actions to be performed in response to the plurality of user inputs. For other embodiments, the processor may reconfigure the plurality of user inputs such that the processor is responsive to only a subset of user inputs of the plurality of user inputs. For example, the subset of user inputs may consist only of page-turn inputs.

Further, for some embodiments, upon detecting the presence of extraneous objects the processor may reconfigure a set of gestures recognized by the computing device. For example, the processor may associate at least one of the plurality of user inputs with a new gesture. Alternatively, and/or in addition, the processor may disassociate at least one of the plurality of user inputs with a known gesture. In some embodiments, the known gesture may correspond with tapping and holding the screen of the display and/or swiping the screen of the display.

Still further, for some embodiments, the processor may determine a contact pressure associated with the detected gesture and compare the contact pressure with a pressure threshold. For example, the contact pressure corresponds with an amount of force applied to a surface of the screen of the display. Thus, after detecting the presence of extraneous objects the processor may interpret the received gesture as one of the plurality of user inputs if the correspond contact pressure exceeds the pressure threshold.

Among other benefits, examples described herein enable a personal display device, such as an e-reading device, to adjust one or more device settings upon detecting the presence of water and/or other extraneous objects on a display surface. The presence of water, dirt, debris, and/or other extraneous (e.g., undesired) objects on the surface of a display screen of an e-reading device may inhibit or otherwise impede one or more functions of the device. For example, the extraneous objects may be falsely interpreted as a user "touch" input by one or more touch sensors provided with the display. This may cause the computing device to malfunction (e.g., perform undesired actions) and/ or prevent the device from responding to actual (e.g., desired) user inputs. Therefore, the e-reading device may adjust one or more device settings, in response to detecting the presence of one or more extraneous objects, in order to prevent the device from malfunctioning and/or to enable a user to continue operating the device in a safe and/or optimized manner.

### SYSTEM DESCRIPTION

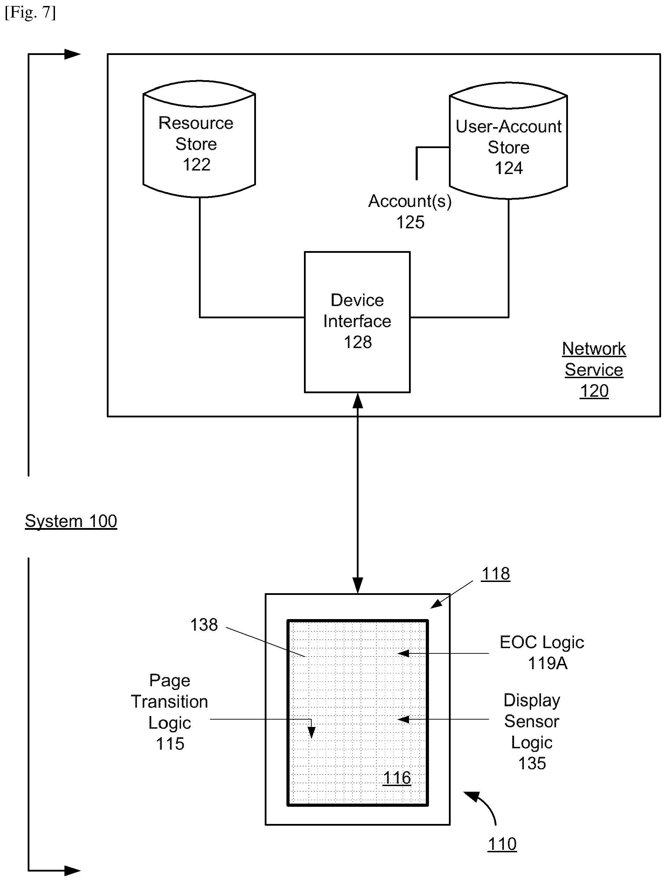

FIG. 7 illustrates a system 100 for utilizing applications and providing e-book services on a computing device, according to a second embodiment.

For some embodiments, the display sensor logic 135 may further detect the presence of water, dirt, debris, and/or other extraneous objects on the surface of the display 116. For example, the display sensor logic 135 may be integrated with a water-sensitive switch (e.g., such as an optical rain sensor) to detect an accumulation of water on the surface of the display 116. In a particular embodiment, the display sensor logic 135 may interpret simultaneous contact with multiple touch sensors 138 as a type of non-user input. For example, the multi-sensor contact may be provided, in part, by water and/or other unwanted or extraneous objects (e.g., dirt, debris, etc.) interacting with the touch sensors 138. Specifically, the e-reading device 110 may then determine, based on the multi-sensor contact, that at least a portion of the multi-sensor contact is attributable to water and/or other extraneous objects.

For some embodiments, the e-reading device 110 further includes extraneous object configuration (EOC) logic 119A to adjust one or more settings of the e-reading device 110 to account for the presence of water and/or other extraneous objects being in contact with the display screen 116. For example, upon detecting the presence of water and/or other extraneous objects on the surface of the display screen 116, the EOC logic 119A may power off the e-reading device 110 to prevent malfunctioning and/or damage to the device 110. For some embodiments, the EOC logic 119A may reconfigure the e-reading device 110 to respond (e.g., and/or not respond) to particular types of user interactions (e.g., gestures) that are subsequently detected via the touch sensors 138. This enables a user to continue operating the e-reading device 110 even with the water and/or other extraneous objects present on the surface of the display screen 116.

### HARDWARE DESCRIPTION

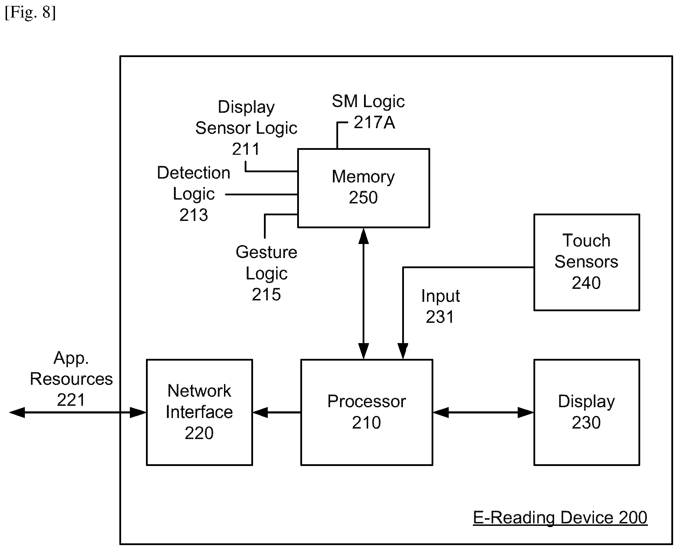

FIG. 8 illustrates an example of an e-reading device 200 or other electronic personal display device, for use with one or more embodiments described herein.

For some embodiments, the display sensor logic 211 may detect the presence of water and/or other extraneous objects on the surface of the display 230. For example, the display sensor logic 211 may determine that extraneous objects are present on the surface of the display 230 based on a number of touch-based interactions detected via the touch sensors 240 and/or a contact duration (e.g., a length of time for which contact is maintained with a corresponding touch sensor 240) associated with each interaction. More specifically, the display sensor logic 211 may detect the presence of water and/or other extraneous objects if a detected interaction falls outside a set of known gestures (e.g., gestures that are recognized by the e-reading device 200). Such embodiments are discussed in greater detail in the first embodiment of this application.

For some embodiments, the display sensor logic 211 further includes splash mode (SM) logic 217A for adjusting one or more settings of the e-reading device 200 in response to detecting the presence of water and/or other extraneous objects on the surface of the display 230. For example, the splash mode logic 217A may configure the e-reading device 200 to operate in a "splash mode" when water and/or other extraneous objects are present (e.g., "splashed") on the surface of the display 230. While operating in splash mode, one or more device configurations may be altered or reconfigured to enable the e-reading device 200 to be continuously operable even while water and/or other extraneous objects are present on the surface of the display 230. More specifically, the splash mode logic 217A may perform one or more operations to mitigate or overcome the presence of extraneous objects (e.g., such as water) on the surface of the display 230. Accordingly, the splash mode logic 217A may be activated by the display sensor logic 211 upon detecting the presence of extraneous objects on the surface of the display 230.

For some embodiments, the splash mode logic 217A may reconfigure one or more actions (e.g., input responses) that are to be performed by the e-reading device 200 in response to user inputs. For example, the splash mode logic 217A may disable certain actions (e.g., such as performing multi-page and/or chapter transitions) that are triggered by multi-contact user interactions (e.g., requiring concurrent contact at multiple distinct locations on the display 230) and/or persistent user interactions (e.g., requiring continuous contact with the touch sensors 240 over a given duration) because such interactions could be misinterpreted by the gesture logic 215 given the presence of extraneous objects on the surface of the display 230. More specifically, while operating in splash mode, the e-reading device 200 may be able to perform only a limited subset of actions that the device 200 would otherwise be able to perform (e.g., when operating in a "normal mode"). In a particular implementation, the functionality of the e-reading device 200 may be limited to performing page-turning actions (e.g., regardless of the received user input). For example, multi-page and/or chapter transition inputs may all be interpreted by the splash mode logic 217A as single page-turn inputs.

Additionally, and/or alternatively, the splash mode logic 217A may enable a new set of actions to be performed by the e-reading device 200. For example, the splash mode logic 217A may remap one or more user inputs (and/or gestures) to the new set of actions. The new set of actions may include actions to be performed by the e-reading device 200 only when water and/or other extraneous objects are present on the surface of the display 230 (e.g., such as notifying the user to clean or wipe off the display 230). More specifically, the new set of actions may enable the e-reading device 200 to operate in an optimized manner while the water and/or other extraneous objects are present.

Further, for some embodiments, the splash mode logic 217A may reconfigure the set of inputs that can be processed by the e-reading device 200. For example, the splash mode logic 217A may disable certain user inputs (e.g., multi-page and/or chapter transition inputs) that correspond with multi-contact and/or persistent user interactions and could therefore be misinterpreted by the gesture logic 215 given the presence of extraneous objects on the surface of the display 230. More specifically, while operating in splash mode, the e-reading device 200 may respond to only a subset of inputs that the device 200 would otherwise be responsive to (e.g., when operating in the normal mode). In a particular implementation, the splash mode logic 217A may respond only to page-turn inputs. For example, inputs corresponding to multi-page and/or chapter transitions may elicit no response from the e-reading device 200 when operating in splash mode.

Still further, for some embodiments, the splash mode logic 217A may reconfigure a set of gestures that are recognizable by the e-reading device 200. For example, the splash mode logic 217A may disable certain gestures (e.g., gestures involving multi-contact and/or persistent user interactions) that could be misinterpreted by the gesture logic 215 given the presence of extraneous objects on the surface of the display 230. More specifically, while operating in splash mode, the e-reading device 200 may recognize only a subset of gestures that the device 200 would otherwise be able to recognize (e.g., when operating in the normal mode). In a particular implementation, the splash mode logic 217A may only recognize gestures corresponding with a single tap. For example, tap-and-hold gestures and/or swiping gestures may elicit no response from the e-reading device 200 when operating in splash mode. More specifically, the splash mode logic 217A may recognize a tapping gesture only upon detecting a contact release or finger liftoff (e.g., as opposed to detecting the initial contact). This may help ensure that the contact or interaction being detected is in fact a tapping gesture and not another extraneous object coming into contact with the surface of the display 230.

For other embodiments, the splash mode logic 217A may process a user input only if a contact pressure associated with the corresponding user interaction (e.g., gesture) exceeds a pressure threshold. For example, the touch sensors 240 may be pressure-sensitive, and may thus detect the amount of force applied by an object while in contact with the surface of the display 230. The magnitude of that force (e.g., the contact pressure) may be associated with each input 231 sent to the processor 210. Accordingly, the processor 210, in executing the splash mode logic 217A, may selectively process the inputs 231 based on the contact pressure associated with each input 231. For example, the contact pressure associated with water, dirt, debris, and/or other extraneous objects may be substantially smaller than the contact pressure that can be applied through human interaction. Thus, in order to distinguish intentional user interactions from contact by extraneous objects, the splash mode logic 217A may process a particular input 231 only if the contact pressure associated with that input exceeds a particular pressure threshold.

### SPLASH MODE GESTURE DETECTION

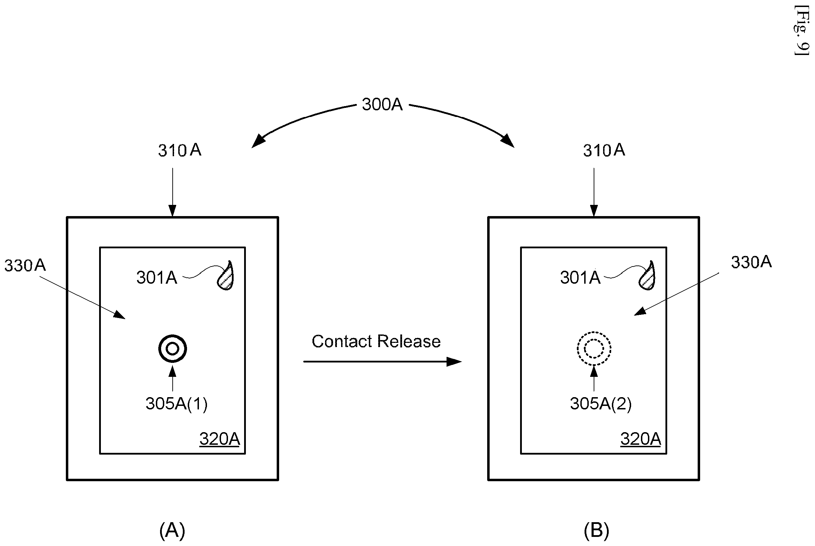

FIGS. 9(A)-9(B) illustrate embodiments of an e-reading device operable in a splash mode when water and/or other extraneous objects are present on the display, in accordance with some embodiments. The e-reading device 300A includes a housing 310A and a display screen 320A. The e-reading device 300A can be substantially tabular or rectangular, so as to have a front surface that is substantially occupied by the display screen 320A so as to enhance content viewing. More specifically, the front surface of the housing 310A may be in the shape of a bezel surrounding the display screen 320A. The display screen 320A can be part of a display assembly, and can be touch sensitive. For example, the display screen 320A can be provided as a component of a modular display assembly that is touch-sensitive and integrated with housing 310A during a manufacturing and assembly process.

A touch sensing region 330A is provided with at least a portion of the display screen 320A. Specifically, the touch sensing region 330A may coincide with the integration of touch-sensors with the display screen 320A. For some embodiments, the touch sensing region 330A may substantially encompass a surface of the display screen 320A. Further, the e-reading device 300A can integrate one or more types of touch-sensitive technologies in order to provide touch-sensitivity on the touch sensing region 330A of the display screen 320A. It should be appreciated that a variety of well-known touch sensing technologies may be utilized to provide touch-sensitivity at either the touch sensing region 330A. By way of example, touch sensors used with the touch sensing region 330 can utilize resistive touch sensors; capacitive touch sensors (using self and/ or mutual capacitance); inductive touch sensors; and/or infrared touch sensors.

For example, touch sensing region 330A can be employed using infrared sensors, which can detect an object contacting the surface of the display screen 320A when the presence of the object "cuts off' or otherwise interferes with an infrared beam being transmitted across the touch sensing region 330A. In a variation, the touch sensing region 330A can be implemented using a grid pattern of electrical elements which can detect capacitance inherent in human skin. For example, the touch sensing region 330A can be implemented using a grid pattern of electrical elements which are placed over or just beneath the surface of the display screen 320A, and which deform sufficiently on contact to detect touch from an object such as a finger. In another variation, the touch-sensing region 330A can be employed using resistive sensors, which can respond to pressure applied to the surface of the display screen 320A. Touch-sensing technologies for implementing the touch sensing region 330A can employ resistive touch sensors, capacitive touch sensors (using self and/or mutual capacitance), inductive touch sensors, and/or infrared sensors.

For some embodiments, e-reading device 300A may detect the presence of an extraneous object 301A (e.g., such as water, dirt, or debris) on the touch sensing region 330A of the display screen 320A. For example, the e-reading device 300A may determine that the extraneous object 301A is present on the display screen 320A if a plurality of separate and distinct interactions are concurrently detected via the touch sensing region 330A and persist for at least a threshold duration. More specifically, upon detecting the extraneous object 301A on the surface of the display screen 320A, the e-reading device 300A may subsequently operate in a splash mode, wherein one or more device settings are adjusted and/or reconfigured to mitigate or overcome the presence of the extraneous object 301A on the surface of the display screen 320A.

In a particular example, while operating in the splash mode, the e-reading device 300A may interpret tap-and-release gestures as page turn inputs. For example, it should be noted that the extraneous object 301A is in persistent contact with the touch sensing region 330A. Thus, in order to distinguish the contact made by the extraneous object 301A from actual user interactions (e.g., gestures), the e-reading device 300A may filter out or ignore any detected interactions involving persistent contact with the touch sensing region 330A. More specifically, the e-reading device 300A may ignore the initial contact associated with a user interaction, instead triggering a response only after detecting a contact separation or release (e.g., corresponding with a user lifting a finger off the surface of the display screen 320A).

With reference to FIG. 9(A), a tap-and-release gesture 305A is initiated when a user touches a finger or object to (e.g., or otherwise makes contact with) the touch sensing region 330A of the display screen 320A. At this time, the e-reading device 300A may register the initial contact 305(1) associated with the tap-and-release gesture, but does not yet interpret the contact 305A(1) as a user input. For example, to the e-reader device 300, the initial contact 305A(1) may be indistinguishable from contact by extraneous objects (e.g., such as extraneous object 301A).

With reference to FIG. 9(B), the tap-and-release gesture 305A is completed when the user release the finger or object from the touch sensing region 330A of the display screen 320A. At this time, the e-reading device 300A may interpret the subsequent contact separation 305A(2) as a particular user input (e.g., corresponding to a page turn). For example, the contact separation 305A(2) helps distinguish the tap-and-release gesture 305A from contact by extraneous objects (e.g., which may be characterized by their persistent contact with the touch sensing region 330A).

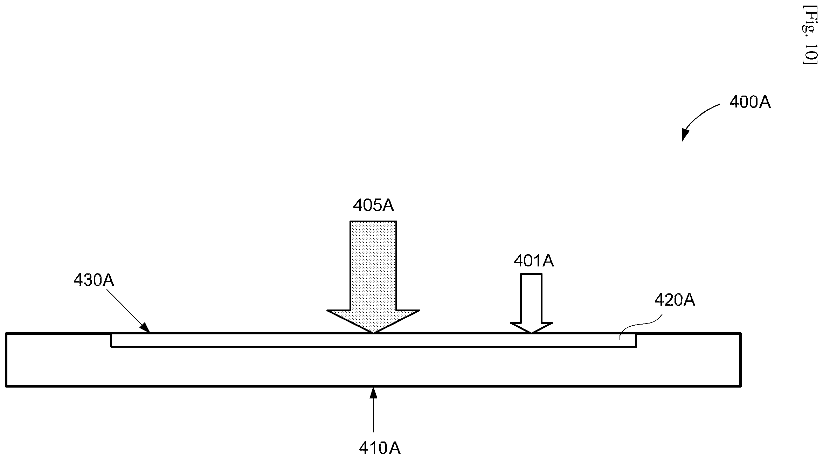

FIG. 10 illustrates an embodiment of an e-reading device operable in a splash mode when water and/or other extraneous objects are present on the display, in accordance with another embodiment. The e-reading device 400A includes a housing 410A and a display screen 420A. The display screen 420A can be part of a display assembly, and can be touch sensitive. A touch sensing region 430A is provided with at least a portion of the display screen 420A. Specifically, the touch sensing region 430A may coincide with the integration of touch-sensors with the display screen 420A. For simplicity, it may be assumed that the housing 410A, display screen 420A, and touch sensing region 430A are functionally similar (if not identical) to the housing 310A, display screen 320A, and touch sensing region 330A, respectively, of FIGS. 9(A)-9(B).

For some embodiments, the e-reading device 400A may detect the presence of an extraneous object 401A (e.g., such as water, dirt, or debris) on the touch sensing region 430A of the display screen 420A. For example, the e-reading device 400A may determine that the extraneous object 401A is present on the display screen 420A if a plurality of separate and distinct interactions are concurrently detected via the touch sensing region 430A and persist for at least a threshold duration. More specifically, upon detecting the extraneous object 401A on the surface of the display screen 420A, the e-reading device 400A may subsequently operate in a splash mode, whereby one or more device settings are adjusted and/or reconfigured to mitigate or overcome the presence of the extraneous object 401A on the surface of the display screen 420A.

In a particular example, while operating the splash mode, the e-reading device 400A may validate a user interaction 405A only if the contact pressure associated with that interaction 405A exceeds a pressure threshold. For example, the touch sensing region 330A may be integrated with one or more pressure sensors to detect and correlate a contact pressure with each object in contact with the touch sensing region 330. The pressure threshold may be a predetermined threshold that is greater than the weight of a typical water droplet (e.g., or small splash) or particle of dirt or debris. It should be noted that the larger the extraneous object 401A, the greater the likelihood that a user will notice the extraneous object 401A and remove it from the display screen 420A. On the other hand, small droplets of water and/or particles of dirt are more likely to pass undetected by the human eye.

In the example shown, the contact pressure associated with the extraneous object 401A is below the pressure threshold (e.g., as indicated by the smaller arrow). Accordingly, the e-reading device 400A may ignore the contact from the extraneous object 401A when operating in the splash mode. On the other hand, the contact pressure associated with the user interaction 405A is above the pressure threshold (e.g., as indicated by the larger, grayed-out arrow). Thus, the e-reading device 400A may interpret the user interaction 405A as a particular user input. More specifically, in some embodiments, the e-reading device 400A may identify the user interaction 405A as one of many recognized gestures.

### DEVICE RECONFIGURATION FUNCTIONALITY

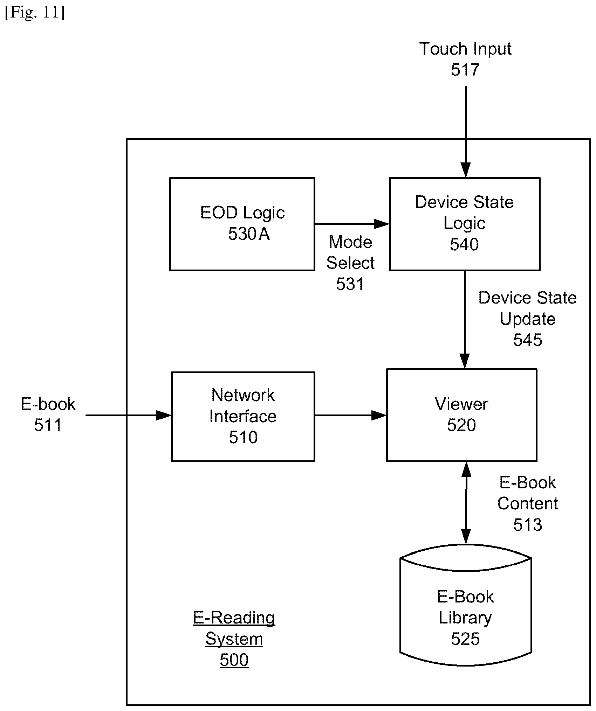

FIG. 11 illustrates an e-reading system 500 for displaying e-book content, according to one or more embodiments. An e-reading system 500 can be implemented as, for example, an application or device, using components that execute on, for example, an e-reading device such as shown with examples of FIGS. 7, 8, 9(A)-9(B), and 10. Furthermore, an e-reading system 500 such as described can be implemented in a context such as shown by FIG. 1, and configured as described by an example of FIG. 8, FIGS. 9(A)-9(B), and/or FIG. 10.

In an example of FIG. 11, a system 500 includes a network interface 510, a viewer 520, water sensing logic 530A, and device state logic 540. As described with an example of FIG. 7, the network interface 510 can correspond to a programmatic component that communicates with a network service in order to receive data and programmatic resources. For example, the network interface 510 can receive an e-book 511 from the network service that the user purchases and/or downloads. E-books 511 can be stored as part of an e-book library 525 with memory resources of an e-reading device (e.g., see memory 250 of e-reading device 200).

The viewer 520 can access e-book content 513 from a selected e-book, provided with the e-book library 525. The e-book content 513 can correspond to one or more pages that comprise the selected e-book. The viewer 520 renders one or more pages on a display screen at a given instance, corresponding to the retrieved e-book content 513. The page state can correspond to a particular page, or set of pages that are displayed at a given moment.

The device state logic 540 can be provided as a feature or functionality of the viewer 520. Alternatively, the device state logic 540 can be provided as a plug-in or as independent functionality from the viewer 520. The device state logic 540 can signal device state updates 545 to the viewer 520. The device state update 545 can cause the viewer 520 to change or alter its current display state. For example, the device state logic 540 may be responsive to touch inputs 517 by signaling device state updates 545 corresponding to page transitions (e.g., single page transition, multi-page transition, or chapter transition).

Further, in specifying the device state update 545, the device state logic 540 can also provide instructions for a device shutoff, display shutoff, and/or screen saver. The device state update 545 for a device shutoff causes the entire system 500, including the viewer 520, to shut down and/or power off. The device state update 545 for a display shutoff causes only the viewer 520 to power off, thus placing the system 500 in a "sleep" mode. Further, the device state update 545 for a screen saver causes a screen saver to be displayed on the viewer 520. It should be noted that other device state updates 545 may also be provided such as, for example, launching and/or closing a book, application, menu, or sub-menu.

Extraneous object detection (EOD) logic 530A can be provided as a feature or functionality of the device state logic 540. Alternatively, the EOD logic 530A can be provided as a plug-in or as independent functionality from the viewer 540. The EOD logic 530A can detect the presence of water and/or other extraneous objects on the surface of the viewer 520. For some embodiments, the EOD logic 530A may be responsive to touch inputs 517 by selectively outputting a mode select signal 531 to the device state logic 540. For example, the EOD logic 530A may detect the presence of one or more extraneous objects based on a number of touch-based interactions detected via touch sensors provided with the viewer 520 (e.g., and received as touch inputs 517) and/or a contact duration associated with each interaction (e.g., a "magnitude" of each of the touch inputs 517).

For some embodiments, the EOD logic 530A may determine that one or more extraneous objects are present on the surface of the viewer 520 upon receiving a touch input 517 that is not a known input for the e-reading system 500. For other embodiments, the EOD logic 530A may determine that one or more extraneous objects are present on the viewer 520 if the touch input 517 is maintained for a duration longer than a threshold duration. Still further, for some embodiments, the EOD 530A may detect the presence of extraneous objects only if the touch input 517 is not a known input and persists beyond the threshold duration.

The mode select signal 531 instructs the device state logic 540 to operate in a "normal mode" or a "splash mode." For example, the device state logic 540 may operate in the normal mode for as long as the mode select signal 531 is deasserted. However, upon detecting extraneous objects on the surface of the viewer 520, the EOD logic 530A may assert the mode select signal 531 to operate the device state logic 540 in splash mode. For example, assertion of the mode selects signal 531 may cause the device state logic to adjust or reconfigure one or more settings of the e-reading system 500. More specifically, some or all of these adjustments may be carried out by the device state logic 540, for example, by generating corresponding device state updates 545.

For some embodiments, while operating in splash mode, the device state logic 540 may reconfigure one or more actions (e.g., input responses) that are to be performed by the e-reading system 500 in response to subsequent user inputs 517. For other embodiments, while operating in splash mode, the device state logic 540 may reconfigure the set of inputs 517 that can be processed by the e-reading system 500. Still further, for some embodiments, while operating in splash mode, the device state logic 540 may reconfigure a set of gestures that are recognizable by the e-reading system 500.

### METHODOLOGY

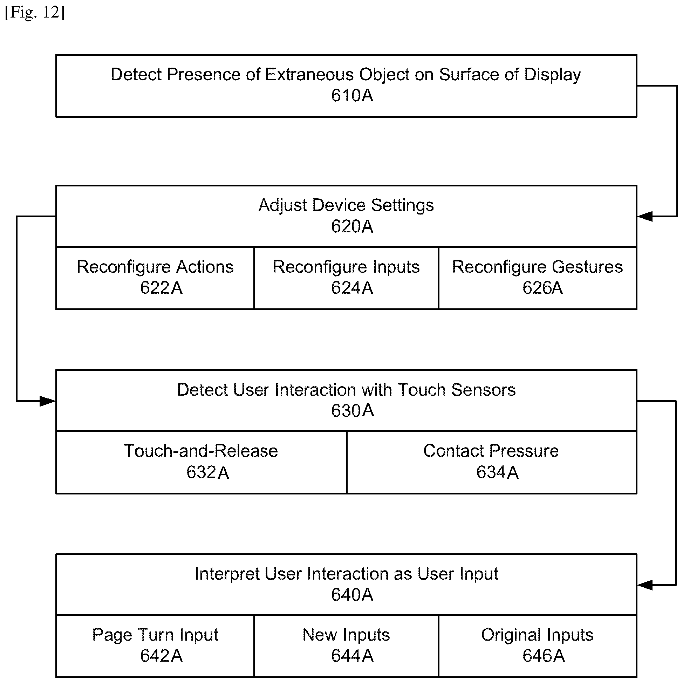

FIG. 12 illustrates a method of operating an e-reading device when water and/or other extraneous objects are present on the display, according to one or more embodiments. In describing an example of FIG. 12, reference may be made to components such as described with FIGS. 8-10 for purposes of illustrating suitable components for performing a step or sub-step being described.

With reference to an example of FIG. 8, the e-reading device 200 may detect the presence of one or more extraneous objects on a surface of the display 230 (610A). For some embodiments, the display sensor logic 211 may detect the presence of extraneous objects on the surface of the display 230 based on a number of touch-based interactions detected via the touch sensors 240 and/or a contact duration associated with each of the interactions. For example, the display sensor logic 211 may determine that extraneous objects are present on the surface of the display 230 if a detected interaction falls outside a set of known gestures.

The e-reading device 200 may then adjust one or more device settings after detecting the presence of one or more extraneous objects (630A). For example, the splash mode logic 217A, may configure the device to operate in splash mode. More specifically, while operating in splash mode, one or more device configurations may be altered or reconfigured to enable the e-reading device 200 to be continuously operable even while the one or more extraneous objects are present on the display surface.

For some embodiments, the splash mode logic 217A may reconfigure one or more actions that are to be performed by the e-reading device 200 in response to user inputs (622A). For example, the splash mode logic 217A may disable certain actions that are triggered by multi-contact and/or persistent user interactions. More specifically, while operating in splash mode, the e-reading device 200 may be able to perform only a limited subset of actions that the device 200 would otherwise be able to perform. In a particular implementation, the functionality of the e-reading device 200 may be limited to performing page-turning actions (e.g., multi-page and/or chapter transition inputs may be interpreted by the splash mode logic 217A as single page-turn inputs). Additionally, and/or alternatively, the splash mode logic 217A may enable a new set of actions to be performed by the e-reading device (e.g., designed to enable the e-reading device 200 to operate in an optimized manner while the one or more extraneous objects are present).

For other embodiments, the splash mode logic 217A may reconfigure the set of inputs that can be processed by the e-reading device 200 (624A). For example, the splash mode logic 217A may disable certain user inputs that correspond with multi-contact and/or persistent user interactions. More specifically, while operating in splash mode, the e-reading device 200 may respond to only a subset of inputs that the device 200 would otherwise be responsive to. In a particular implementation, the splash mode logic 217A may respond only to page-turn inputs (e.g., inputs corresponding to multi-page and/or chapter transitions may elicit no response from the e-reading device 200).

Further, for some embodiments, the splash mode logic 217A may reconfigure a set of gesture that are recognizable by the e-reading device 200 (626A). For example, the splash mode logic 217A may disable certain gestures that could be misinterpreted by the gesture logic 215 given the presence of extraneous objects on the surface of the display 230. More specifically, while operating in splash mode, the e-reading device 200 may recognize only a subset of gestures that the device 200 would otherwise be able to recognize. In a particular implementation, the splash mode logic 217A may only recognize gestures corresponding with a single tap (e.g., tap-and-hold and/or swipe gestures may elicit no response from the e-reading deice 200).

After adjusting the device settings, the e-reading device 200 may subsequent detect a user interaction with one or more touch sensors provided with the display 230 (630A). For example, the interactions may be detected by the touch sensor components 240. More specifically, the placement of the touch sensor components 240 may coincide with one or more touch sensing regions on the surface of the display 230.

The touch sensors 240 may be configured to detect a touch-and-release gesture (632A). For example, as described above with reference to FIGS. 9(A)-9(B), the e-reading device 300A may recognize a tapping gesture (e.g., as a page-turn input) only after detecting the initial contact 305A(1) and subsequent contact separation 305A(2). For other embodiments, the touch sensors 240 may be configured to detect a contact pressure association with each user interaction (634A). For example, as described above with reference to FIG. 10, the e-reading device 400A may recognize a user input only if the contact pressure associated with the corresponding user interaction (e.g., gesture) exceeds a predetermined pressure threshold.

Finally, the e-reading device 200 may interpret the user interaction as a particular user input (640A). For example, the processor 210, in executing the splash mode logic 217A may interpret or otherwise process the detected user interaction based on the adjusted device settings. The processor 210 may process the user interaction in a manner that mitigates or overcomes the presence of extraneous objects on the surface of the display 230.

The processor 210 may interpret the user interaction as a page turn input (642A). More specifically, the processor 210 may interpret any user interaction (e.g., regardless of type or gesture) as a page turn input. In other embodiments, the processor may interpret the user interaction as a new input (644A). For example, the new input my trigger or otherwise correspond with an action that the e-reading device 200 typically does not perform while operating in the normal mode (e.g., such as notifying the user to the presence of extraneous objects on the surface of the display 230). Still further, for some embodiments, the processor 210 may interpret the user interaction as one of the original inputs (646A). For example, if the processor 210, in executing the splash mode logic 217A, determines that the contact pressure associated with the user interaction exceeds the pressure threshold, the processor 210 may subsequently interpret the user interaction (e.g., gesture) as one of the original inputs (e.g., page turn, multi-page transition, chapter transition, etc.) recognized by the e-reading device 200.

## Claims

1. A computing based device comprising:
a display assembly including a screen;
a housing that at least partially circumvents the screen so that the circumvented area of the screen is viewable;
a plurality of touch sensors provided with the display assembly; and
a processor provided within the housing, the processor configured to:
detect a presence of one or more extraneous objects on a surface of the screen of the display assembly;
adjust one or more setting of the computing device in response to detecting the presence of the one or more extraneous objects by reconfiguring a set of actions to be performed in response to a plurality of user inputs and/or by reconfiguring a set of gestures recognized by the computing device;
further detect a gesture via the plurality of touch sensors; and
interpret the gesture as one of the plurality of user inputs.

2. The computing based device of claim 1, wherein the processor is configured to detect the presence of one or more extraneous objects by:
detecting a plurality of interactions with the plurality of touch sensors; and
determining, based on the plurality of interactions, the presence of extraneous objects on the surface of the screen of the display assembly.

3. The computing based device of claim 2, wherein the processor is configured to determine the presence of extraneous objects by:
determining that the plurality of interactions do not correlate with a known user input.

4. The computing based device of claim 2, wherein the processor is to further:
determine a number of interactions that are detected, concurrently, via the plurality of touch sensors.

5. The computing based device of claim 4, wherein the processor is to determine the presence of extraneous objects based on the number of interactions that are concurrently detected via the plurality of touch sensors.

6. The computing based device of claim 2, wherein the processor is to further:
determine a contact duration associated with each of the plurality of interactions, wherein each contact duration represents a length of time for which a corresponding object is in continuous contact with a particular region of the screen when interacting with the plurality of touch sensors.

7. The computing based device of claim 6, wherein the processor is to determine the presence of extraneous objects based on the contact duration associated with each of the plurality of interactions.

8. The computing based device of claim 7, wherein the processor determines that an extraneous object is present on the surface of the screen if the contact duration for at least one of the plurality of interactions exceeds a threshold duration.

9. The computing based device of claim 2, wherein the processor is configured to further:
perform one or more operations to enhance viewability of content appearing on the display.

10. The computing based device of claim 1, wherein the processor is configured to adjust one or more setting of the computing device by powering off the display.

11. The computing based device of claim 1, wherein the processor is to adjust one or more setting of the computing device by altering one or more device configurations.

12. The computing based device of claim 11, wherein altering one or more device configurations includes disabling or deactivating one or more touch sensors that coincide with a region of the display on which the extraneous objects are present.

13. The computing based device of claim 1, wherein the processor is configured to adjust one or more setting of the computing device by reconfiguring one or more input responses.

14. The computing based device of claim 13, wherein reconfiguring one or more input responses includes disabling recognition of certain gestures.

15. The computing based device of claim 13 or 14, wherein reconfiguring one or more input responses includes enabling a new set of gestures to be recognized.

16. The computing based device of claim 1, wherein the processor is configured to adjust the one or more settings by:
reconfiguring the plurality of inputs such that the processor is responsive to only a subset of user inputs of the plurality of user inputs.

17. The computing based device of claim 16, wherein the subset of user inputs consists of page-turn inputs.

18. The computing based device of claim 1, wherein the processor is configured to: adjust the one or more setting of the computing device in response to detecting the presence of the one or more extraneous objects by reconfiguring the set of gestures recognized by the computing device; and
reconfigure the set of gestures by:
associating at least one of the plurality of user inputs with a new gesture.

19. The computing based device of claim 1, wherein, the processor is configured to: adjust the one or more setting of the computing device in response to detecting the presence of the one or more extraneous objects by reconfiguring the set of gestures recognized by the computing device; and
reconfigure the set of gestures by:
disassociating at least one of the plurality of user inputs with a known gesture.

20. The computing based device of claim 19, wherein the known gesture corresponds with at least one of: (i) tapping and holding the screen of the display, or (ii) swiping the screen of the display.

21. The computing based device of claim 1, wherein the processor is configured to: adjust the one or more setting of the computing device in response to detecting the presence of the one or more extraneous objects by reconfiguring the set of gestures recognized by the computing device; and
adjust the one or more settings by:
determining a contact pressure associated with the gesture, wherein the contact pressure corresponds with an amount of force applied to a surface of the screen of the display; and
comparing the contact pressure with a pressure threshold.

22. The computing based device of claim 20, wherein the processor is configured to interpret the gesture by:
interpreting the gesture as one of the plurality of user inputs if the corresponding contact pressure exceeds the pressure threshold.

23. A method for operating a computing device, the method being implemented by one or more processors and comprising the following steps:
detecting a presence of one or more extraneous objects on a surface of a screen of a display assembly;
adjusting one or more setting of the computing device in response to detecting the presence of the one or more extraneous objects by reconfiguring a set of actions to be performed in response to a plurality of user inputs and/or by reconfiguring a set of gestures recognized by the computing device;
further detecting a gesture via a plurality of touch sensors; and
interpreting the gesture as one of the plurality of user inputs.

24. A computer program, that when executed by one or more processors, cause the one or more processors to perform each of the steps of the method of claim 23.

## Patentansprüche

1. Rechenbasierte Vorrichtung, die Folgendes umfasst:
eine Anzeigeanordnung, die einen Bildschirm beinhaltet;
ein Gehäuse, das den Bildschirm wenigstens teilweise umgeht, so dass der umgangene Bereich des Bildschirms sichtbar ist;
mehrere Berührungssensoren, die mit der Anzeigeanordnung versehen sind; und
einen Prozessor, der innerhalb des Gehäuses bereitgestellt ist, wobei der Prozessor zu Folgendem konfiguriert ist:
Erfassen eines Vorhandenseins eines oder mehrerer Fremdobjekte auf einer Oberfläche des Bildschirms der Anzeigeanordnung;
Anpassen einer oder mehrerer Einstellungen der Rechenvorrichtung als Reaktion auf das Erfassen des Vorhandenseins des einen oder der mehreren Fremdobjekte durch Neukonfigurieren einer Reihe von Aktionen, die als Reaktion auf mehrere Benutzereingaben auszuführen sind, und/oder durch Neukonfigurieren einer Reihe von Gesten, die durch die Rechenvorrichtung erkannt werden;
ferner Erfassen einer Geste über die mehreren Berührungssensoren; und
Interpretieren der Geste als eine der mehreren Benutzereingaben.

2. Rechenbasierte Vorrichtung nach Anspruch 1, wobei der Prozessor zum Erfassen des Vorhandenseins von einem oder mehreren Fremdobjekten durch Folgendes konfiguriert ist:
Erfassen von mehreren Interaktionen mit den mehreren Berührungssensoren; und
Bestimmen des Vorhandenseins von Fremdobjekten auf der Oberfläche des Bildschirms der Anzeigeanordnung basierend auf den mehreren Interaktionen.

3. Rechenbasierte Vorrichtung nach Anspruch 2, wobei der Prozessor zum Bestimmen des Vorhandenseins von Fremdobjekten durch Folgendes konfiguriert ist:
Bestimmen, dass die mehreren Interaktionen nicht mit einer bekannten Benutzereingabe korrelieren.

4. Rechenbasierte Vorrichtung nach Anspruch 2, wobei der Prozessor ferner zu Folgendem dient:
Bestimmen einer Anzahl von Interaktionen, die gleichzeitig über die mehreren Berührungssensoren erfasst werden.

5. Rechenbasierte Vorrichtung nach Anspruch 4, wobei der Prozessor das Vorhandensein von Fremdobjekten basierend auf der Anzahl von Interaktionen zu bestimmen hat, die gleichzeitig über die mehreren Berührungssensoren erfasst werden.

6. Rechenbasierte Vorrichtung nach Anspruch 2, wobei der Prozessor ferner zu Folgendem dient:
Bestimmen einer Kontaktdauer, die mit jeder der mehreren Interaktionen verknüpft ist, wobei jede Kontaktdauer eine Zeitdauer darstellt, für die ein entsprechendes Objekt in fortlaufendem Kontakt mit einer bestimmten Region des Bildschirms steht, wenn es mit den mehreren Berührungssensoren interagiert.

7. Rechenbasierte Vorrichtung nach Anspruch 6, wobei der Prozessor das Vorhandensein von Fremdobjekten basierend auf der Kontaktdauer zu bestimmen hat, die mit jeder der mehreren Interaktionen verbunden ist.

8. Rechenbasierte Vorrichtung nach Anspruch 7, wobei der Prozessor bestimmt, dass ein Fremdobjekt auf der Oberfläche des Bildschirms vorhanden ist, falls die Kontaktdauer für wenigstens eine der mehreren Interaktionen eine Schwellendauer überschreitet.

9. Rechenbasierte Vorrichtung nach Anspruch 2, wobei der Prozessor ferner zu Folgendem konfiguriert ist:
Ausführen einer oder mehrerer Betriebe, um die Sichtbarkeit des auf der Anzeige erscheinenden Inhalts zu verbessern.

10. Rechenbasierte Vorrichtung nach Anspruch 1, wobei der Prozessor zum Anpassen einer oder mehrerer Einstellungen der Rechenvorrichtung durch Ausschalten der Anzeige konfiguriert ist.

11. Rechenbasierte Vorrichtung nach Anspruch 1, wobei der Prozessor eine oder mehrere Einstellungen der Rechenvorrichtung durch Ändern einer oder mehrerer Vorrichtungskonfigurationen anzupassen hat.

12. Rechenbasierte Vorrichtung nach Anspruch 11, wobei das Ändern einer oder mehrerer Vorrichtungskonfigurationen ein Abschalten oder Deaktivieren eines oder mehrerer Berührungssensoren beinhaltet, die mit einer Region der Anzeige zusammenfallen, auf der die Fremdobjekte vorhanden sind.

13. Rechenbasierte Vorrichtung nach Anspruch 1, wobei der Prozessor zum Anpassen einer oder mehrerer Einstellungen der Rechenvorrichtung durch Neukonfigurieren einer oder mehrerer Eingabereaktionen konfiguriert ist.

14. Rechenbasierte Vorrichtung nach Anspruch 13, wobei das Neukonfigurieren einer oder mehrerer Eingabereaktionen das Abschalten der Erkennung bestimmter Gesten beinhaltet.

15. Rechenbasierte Vorrichtung nach Anspruch 13 oder 14, wobei das Neukonfigurieren einer oder mehrerer Eingabereaktionen das Ermöglichen des Erkennens eines neuen Satzes von Gesten beinhaltet.

16. Rechenbasierte Vorrichtung nach Anspruch 1, wobei der Prozessor durch Folgendes zum Anpassen der einen oder der mehreren Einstellungen konfiguriert ist:
Neukonfigurieren der mehreren Eingaben derart, dass der Prozessor nur auf eine Teilmenge von Benutzereingaben der mehreren Benutzereingaben reagiert.

17. Rechenbasierte Vorrichtung nach Anspruch 16, wobei die Teilmenge von Benutzereingaben aus Eingaben zum Seitenumblättern besteht.

18. Rechenbasierte Vorrichtung nach Anspruch 1, wobei der Prozessor zu Folgendem konfiguriert ist:
Anpassen der einen oder der mehreren Einstellungen der Rechenvorrichtung als Reaktion auf das Erfassen des Vorhandenseins des einen oder der mehreren Fremdobjekte durch Neukonfigurieren des Satzes von Gesten, die von der Rechenvorrichtung erkannt werden; und
Neukonfigurieren des Satzes von Gesten durch Folgendes:
Verknüpfen wenigstens einer der mehreren Benutzereingaben mit einer neuen Geste.

19. Rechenbasierte Vorrichtung nach Anspruch 1, wobei der Prozessor zu Folgendem konfiguriert ist: Anpassen der einen oder der mehreren Einstellungen der Rechenvorrichtung als Reaktion auf das Erfassen des Vorhandenseins des einen oder der mehreren Fremdobjekte durch Neukonfigurieren des Satzes von Gesten, die durch die Rechenvorrichtung erkannt werden; und
Neukonfigurieren des Satzes von Gesten durch Folgendes:
Auflösen der Verknüpfung zwischen der wenigstens einen der mehreren Benutzereingaben mit einer bekannten Geste.

20. Rechenbasierte Vorrichtung nach Anspruch 19, wobei die bekannte Geste wenigstens einer der Folgenden entspricht: (i) Tippen und Halten des Bildschirms der Anzeige oder (ii) Wischen über den Bildschirm der Anzeige.

21. Rechenbasierte Vorrichtung nach Anspruch 1, wobei der Prozessor zu Folgendem konfiguriert ist:
Anpassen der einen oder der mehreren Einstellungen der Rechenvorrichtung als Reaktion auf das Erfassen des Vorhandenseins des einen oder der mehreren Fremdobjekte durch Neukonfigurieren des Satzes von Gesten, die durch die Rechenvorrichtung erkannt werden; und
Anpassen der einen oder der mehreren Einstellungen durch Folgendes:
Bestimmen eines Kontaktdrucks, der mit der Geste verknüpft ist, wobei der Kontaktdruck einer Kraftmenge entspricht, die auf eine Oberfläche des Bildschirms der Anzeige ausgeübt wird; und
Vergleichen des Kontaktdrucks mit einer Druckschwelle.

22. Rechenbasierte Vorrichtung nach Anspruch 20, wobei der Prozessor zum Interpretieren der Geste durch Folgendes konfiguriert ist:
Interpretieren der Geste als eine der mehreren Benutzereingaben, wenn der entsprechende Kontaktdruck die Druckschwelle überschreitet.

23. Verfahren zum Betreiben einer Rechenvorrichtung, wobei das Verfahren, das durch einen oder mehrere Prozessoren implementiert wird, die folgenden Schritte umfasst:
Erfassen eines Vorhandenseins eines oder mehrerer Fremdobjekte auf einer Oberfläche eines Bildschirms einer Anzeigeanordnung;
Anpassen einer oder mehrerer Einstellungen der Rechenvorrichtung als Reaktion auf das Erfassen des Vorhandenseins des einen oder der mehreren Fremdobjekte durch Neukonfigurieren einer Reihe von Aktionen, die als Reaktion auf mehrere Benutzereingaben auszuführen sind, und/oder durch Neukonfigurieren einer Reihe von Gesten, die von der Rechenvorrichtung erkannt werden;
ferner Erfassen einer Geste über mehrere Berührungssensoren; und
Interpretieren der Geste als eine der mehreren Benutzereingaben.

24. Computerprogramm, das, wenn es durch einen oder mehrere Prozessoren ausgeübt wird, den einen oder die mehreren Prozessoren veranlasst, jeden der Schritte des Verfahrens nach Anspruch 23 auszuführen.

## Revendications

1. Dispositif informatique comprenant :
un ensemble d'affichage comportant un écran ;
un boîtier qui contourne au moins partiellement l'écran de sorte que la zone contournée de l'écran peut être visualisée ;
une pluralité de capteurs tactiles fournis avec l'ensemble d'affichage ; et
un processeur prévu à l'intérieur du boîtier, le processeur étant configuré pour :
détecter une présence d'un ou de plusieurs objets étrangers sur une surface de l'écran de l'ensemble d'affichage ;
régler un ou plusieurs paramètres du dispositif informatique en réponse à la détection de la présence du ou des objets étrangers en reconfigurant un ensemble d'actions à effectuer en réponse à une pluralité d'entrées utilisateur et/ou en reconfigurant un ensemble de gestes reconnus par le dispositif informatique ;
détecter en outre un geste par l'intermédiaire de la pluralité de capteurs tactiles ; et
interpréter le geste comme l'une de la pluralité d'entrées utilisateur.

2. Dispositif informatique selon la revendication 1, dans lequel le processeur est configuré pour détecter la présence d'un ou de plusieurs objets étrangers par :
la détection d'une pluralité d'interactions avec la pluralité de capteurs tactiles ; et
la détermination, sur la base de la pluralité d'interactions, de la présence d'objets étrangers sur la surface de l'écran de l'ensemble d'affichage.

3. Dispositif informatique selon la revendication 2, dans lequel le processeur est configuré pour déterminer la présence d'objets étrangers par :
la détermination selon laquelle la pluralité d'interactions ne sont pas en corrélation avec une entrée d'utilisateur connue.

4. Dispositif informatique selon la revendication 2, dans lequel le processeur doit en outre :
déterminer un certain nombre d'interactions qui sont détectées, simultanément, par l'intermédiaire de la pluralité de capteurs tactiles.

5. Dispositif informatique selon la revendication 4, dans lequel le processeur doit déterminer la présence d'objets étrangers sur la base du nombre d'interactions qui sont détectées simultanément par l'intermédiaire de la pluralité de capteurs tactiles.

6. Dispositif informatique selon la revendication 2, dans lequel le processeur doit en outre :
déterminer une durée de contact associée à chacune de la pluralité d'interactions, chaque durée de contact représentant une durée pendant laquelle un objet correspondant est en contact continu avec une région particulière de l'écran lorsqu'il interagit avec la pluralité de capteurs tactiles.

7. Dispositif informatique selon la revendication 6, dans lequel le processeur doit déterminer la présence d'objets étrangers sur la base de la durée de contact associée à chacune de la pluralité d'interactions.

8. Dispositif informatique selon la revendication 7, dans lequel le processeur détermine qu'un objet étranger est présent sur la surface de l'écran si la durée de contact pour au moins l'une de la pluralité d'interactions dépasse une durée seuil.

9. Dispositif informatique selon la revendication 2, dans lequel le processeur est en outre configuré pour :
effectuer une ou plusieurs opérations pour améliorer la visibilité du contenu apparaissant sur l'affichage.

10. Dispositif informatique selon la revendication 1, dans lequel le processeur est configuré pour régler un ou plusieurs paramètres du dispositif informatique en éteignant l'affichage.

11. Dispositif informatique selon la revendication 1, dans lequel le processeur doit régler un ou plusieurs paramètres du dispositif informatique en modifiant une ou plusieurs configurations de dispositif.

12. Dispositif informatique selon la revendication 11, dans lequel la modification d'une ou de plusieurs configurations de dispositif comporte la désactivation ou la mise hors service d'un ou de plusieurs capteurs tactiles qui coïncident avec une région de l'affichage sur laquelle les objets étrangers sont présents.

13. Dispositif informatique selon la revendication 1, dans lequel le processeur est configuré pour régler un ou plusieurs paramètres du dispositif informatique en reconfigurant une ou plusieurs réponses d'entrée.

14. Dispositif informatique selon la revendication 13, dans lequel la reconfiguration d'une ou de plusieurs réponses d'entrée comporte la désactivation de la reconnaissance de certains gestes.

15. Dispositif informatique selon la revendication 13 ou 14, dans lequel la reconfiguration d'une ou de plusieurs réponses d'entrée comporte l'activation d'un nouvel ensemble de gestes à reconnaître.

16. Dispositif informatique selon la revendication 1, dans lequel le processeur est configuré pour régler le ou les paramètres par :
la reconfiguration de la pluralité d'entrées de sorte que le processeur ne répond qu'à un sous-ensemble d'entrées utilisateur de la pluralité d'entrées utilisateur.

17. Dispositif informatique selon la revendication 16, dans lequel le sous-ensemble d'entrées utilisateur est constitué d'entrées de changement de page.

18. Dispositif informatique selon la revendication 1, dans lequel le processeur est configuré pour :
régler le ou les paramètres du dispositif informatique en réponse à la détection de la présence du ou des objets étrangers en reconfigurant l'ensemble de gestes reconnus par le dispositif informatique ; et
reconfigurer l'ensemble des gestes par :
l'association d'au moins l'une de la pluralité d'entrées utilisateur à un nouveau geste.

19. Dispositif informatique selon la revendication 1, dans lequel le processeur est configuré pour :
régler le ou les paramètres du dispositif informatique en réponse à la détection de la présence du ou des objets étrangers en reconfigurant l'ensemble de gestes reconnus par le dispositif informatique ; et
reconfigurer l'ensemble des gestes par :
la dissociation d'au moins l'une de la pluralité d'entrées utilisateur avec un geste connu.

20. Dispositif informatique selon la revendication 19, dans lequel le geste connu correspond à au moins un geste parmi :
(i) appuyer et maintenir l'écran de l'affichage, ou (ii) faire glisser l'écran de l'affichage.

21. Dispositif informatique selon la revendication 1, dans lequel le processeur est configuré pour :
régler le ou les paramètres du dispositif informatique en réponse à la détection de la présence du ou des objets étrangers en reconfigurant l'ensemble de gestes reconnus par le dispositif informatique ; et
régler un ou plusieurs paramètres par :
la détermination d'une pression de contact associée au geste, la pression de contact correspondant à une quantité de force appliquée sur une surface de l'écran de l'affichage ; et
la comparaison de la pression de contact avec un seuil de pression.

22. Dispositif informatique selon la revendication 20, dans lequel le processeur est configuré pour interpréter le geste par :
l'interprétation du geste comme l'une de la pluralité d'entrées utilisateur si la pression de contact correspondante dépasse le seuil de pression.

23. Procédé de fonctionnement d'un dispositif informatique, le procédé étant mis en œuvre par un ou plusieurs processeurs et comprenant les étapes suivantes :
la détection d'une présence d'un ou de plusieurs objets étrangers sur une surface d'un écran d'un ensemble d'affichage ;
le réglage d'un ou de plusieurs réglages du dispositif informatique en réponse à la détection de la présence d'un ou de plusieurs objets étrangers en reconfigurant un ensemble d'actions à exécuter en réponse à une pluralité d'entrées utilisateur et/ou en reconfigurant un ensemble de gestes reconnus par le dispositif informatique ;
la détection supplémentaire d'un geste par l'intermédiaire d'une pluralité de capteurs tactiles ; et
l'interprétation du geste comme l'une de la pluralité d'entrées utilisateur.

24. Programme informatique qui, lorsqu'il est exécuté par un ou plusieurs processeurs, amène le ou les processeurs à exécuter chacune des étapes du procédé selon la revendication 23.
